# EUROPEAN PATENT APPLICATION

(11) **EP 4 660 241 A1**
(43) Date of publication of application: **10.12.2025**
(21) Application number: 24750363.4
(22) Date of filing: 31.01.2024
(51) Int. Cl.: C08L 63/00, C08G 59/20, C08G 59/40, C08G 59/50, C08K 3/013, C08K 3/20, C08K 3/22, C08K 5/17, C08K 5/103, C09J 9/00, C09J 11/04, C09J 11/06, C09J 163/00, C09J 201/00, C09K 5/14, H01M 10/613, H01M 10/625, H01M 10/653, H01M 10/6554

(54) **THERMALLY CONDUCTIVE RESIN COMPOSITION AND THERMALLY CONDUCTIVE MEMBER**

(30) Priority: 31.01.2023 JP 2023013583; 31.01.2023 JP 2023013584; 08.03.2023 JP 2023035923; 31.03.2023 JP 2023059531; 31.03.2023 JP 2023059573
(71) Applicant: Sekisui Chemical Co., Ltd., Osaka-shi, Osaka 530-8565 (JP)
(72) Inventor: KOBAYASHI, Yusuke, Mishima-gun, Osaka 618-0021 (JP); FURUKAWA, Atsushi, Mishima-gun, Osaka 618-0021 (JP); IWAMOTO, Tatsuya, Mishima-gun, Osaka 618-0021 (JP); YOSHIOKA, Tetsuro, Mishima-gun, Osaka 618-0021 (JP)
(74) Representative: Ter Meer Steinmeister & Partner
(86) International application number: PCT/JP2024/003177
(87) International publication number: WO 2024/162414

(57) **Abstract**

A thermally conductive resin composition comprising a polyfunctional epoxy resin (A), an amine curing agent (B), and a thermally conductive filler (C), the polyfunctional epoxy resin (A) being an epoxy resin that has an aromatic ring and is a liquid at 23°C or an epoxy resin having a molecular weight of 600 or less, the amine curing agent (B) having an amino group (b1) selected from the group consisting of primary amino groups and secondary amino groups, carbon atom(s) bonded to the nitrogen atom constituting the amino group (b1), not forming a ring structure, at least one of the carbon atom(s) being bonded to another carbon atom and an atom other than a hydrogen atom.

## Description

### Technical Field

The present invention relates to a thermally conductive resin composition and a thermally conductive member for use in battery assemblies and the like.

### Background Art

Thermally conductive resin compositions that are curable liquids are widely known, and are used, for example, as thermally conductive members such as heat dissipating gap fillers that are provided between a heating element and a heat dissipating element, and then cured to form a cured product, and transfer heat generated by the heating element to the heat dissipating element.

In recent years, amid growth in the production volume of electric vehicles in the market, there has been an increasing demand for two-component and room temperature curing typed heat dissipating gap fillers for lithium ion batteries (LiBs). Specifically, in lithium ion batteries, in consideration of heat dissipation properties, heat dissipating gap fillers are often provided between members such as battery cells, battery modules, and battery packs in order to fix the members and enhance heat dissipation properties.

Conventionally, urethane resins have often been used as thermally conductive resin compositions for LiBs, but in recent years, the use of epoxy resins has been considered. As an epoxy resin-based resin composition used for thermally conductive applications, for example, as disclosed in PTL 1, one containing a tri- or higher-functional epoxy resin having no aromatic skeleton, a liquid bi- or lower-functional epoxy resin, a curing agent, a silane compound having no functional groups other than an alkoxy group, and a thermally conductive filler is known.

### Citation List

### Patent Literature

PTL 1: Japanese Patent Application Publication No. 2022-116587

### Summary of Invention

### Technical Problem

By the way, when battery assemblies such as battery packs are assembled, after battery cells are attached to a cooling plate or the like, they are sometimes peeled off and reattached, which is known as rework. Since battery cells, cooling plates and the like are generally required to be reused even after rework, they are required to be peeled off with a force that does not damage the battery cells or cooling plates during rework. In addition, during rework, if the cured product of the thermally conductive resin composition does not peel off but remains on the plate or battery cell, there is a problem that an operation for removing the residue is required.

Here, in order to enhance peelability during rework, it is conceivable to reduce the adhesive force of the thermally conductive resin composition. However, if the adhesive force of the thermally conductive resin composition is simply reduced, there is a risk of peeling off between the battery cell and the cooling plate during use.

Therefore, the inventors have studied peelability during rework, and in view of current conditions in which rework is performed within a relatively short period of time after attachment, they have found that there is a need for a thermally conductive resin composition that can adhere with a relatively low adhesive force in the initial stage of curing and thus can be easily peeled off, but can adhere with a high adhesive force after completely curing in which it is completely cured in an appropriate time. Thus, the inventors have found that, in consideration of the peelability in the rework and adhesion in practical use, it is necessary to inhibit curing in the initial stage, and control the curing rate so that complete curing can be performed in an appropriate time.

On the other hand, the thermally conductive resin composition described in PTL 1 is assumed to be used for semiconductor packaging, and there has been no study on controlling the curing rate in consideration of peelability in rework or reworkability. In addition, as an epoxy resin curing agent, amine-based curing agents are generally widely used, but the amine-based curing agents have a problem of poor handling properties due to many of these having a property of being highly irritating.

Thus, an object of the present invention is to provide a thermally conductive resin composition which has favorable handling properties, inhibits curing in the initial stage, and allows a curing rate to be controlled so that complete curing can be performed in an appropriate time.

### Solution to Problem

The inventors conducted extensive studies, and as a result, found that, in a thermally conductive resin composition containing an epoxy resin, an amine curing agent, and a thermally conductive filler, when a specific epoxy resin and amine curing agent are used, the above object can be achieved, and they completed the present invention shown below. Specifically, the present invention provides the following [1] to [15].
[1] A thermally conductive resin composition including a polyfunctional epoxy resin (A), an amine curing agent (B), and a thermally conductive filler (C),
   the polyfunctional epoxy resin (A) being an epoxy resin that has an aromatic ring and is a liquid at 23°C or an epoxy resin having a molecular weight of 600 or less,
   the amine curing agent (B) having an amino group (b1) selected from the group consisting of primary amino groups and secondary amino groups,
   carbon atom(s) bonded to the nitrogen atom constituting the amino group (b1), not forming a ring structure, at least one of the carbon atom(s) being bonded to another carbon atom and an atom other than a hydrogen atom.
[2] The thermally conductive resin composition according to [1], wherein the amine curing agent (B) has three or more active hydrogen atoms of amino groups in one molecule.
[3] The thermally conductive resin composition according to [1] or [2], wherein a content of the thermally conductive filler (C) is 50 vol% or more.
[4] The thermally conductive resin composition according to any one of [1] to [3], wherein a content of the polyfunctional epoxy resin (A) with respect to a total amount of the epoxy resin contained in the thermally conductive resin composition is 50 mass% or more.
[5] The thermally conductive resin composition according to any one of [1] to [4], wherein a content of the amine curing agent (B) with respect to a total amount of amines contained in the thermally conductive resin composition is 50 mass% or more.
[6] The thermally conductive resin composition according to any one of [1] to [5], wherein an equivalent ratio of active hydrogen atoms of amino groups contained in the thermally conductive resin composition to epoxy groups contained in the thermally conductive resin composition is more than 1 and 2.7 or less.
[7] The thermally conductive resin composition according to any one of [1] to [6], wherein the amine curing agent (B) has a primary amino group.
[8] The thermally conductive resin composition according to [7], wherein the amine curing agent (B) has two or more primary amino groups in one molecule.
[9] The thermally conductive resin composition according to any one of [1] to [8], wherein the amine curing agent (B) is an aliphatic amine.
[10] The thermally conductive resin composition according to any one of [1] to [9], further including a monofunctional epoxy resin.
[11] The thermally conductive resin composition according to any one of [1] to [10], including a first agent which contains an epoxy resin including the polyfunctional epoxy resin (A) and with which a first container is filled, and a second agent which contains the amine curing agent and with which a second container is filled.
[12] A container set, which is filled with the thermally conductive resin composition according to [11], including the first container filled with the first agent and the second container filled with the second agent.
[13] A thermally conductive member formed of a cured product of the thermally conductive resin composition according to any one of [1] to [11].
[14] A battery assembly including the thermally conductive member according to [13].
[15] Use of the thermally conductive resin composition according to any one of [1] to [11] as at least one of a gap filler between battery cells, a gap filler between a battery cell and a module housing, a gap filler between a battery module and a battery pack housing, or a gap filler between a battery cell and a battery pack housing.

### Advantageous Effects of Invention

According to the present invention, it is possible to provide a thermally conductive resin composition which has favorable handling properties, inhibits curing in the initial stage, and allows a curing rate to be controlled so that complete curing can be performed in an appropriate time.

### Brief Description of Drawings

[Fig. 1]

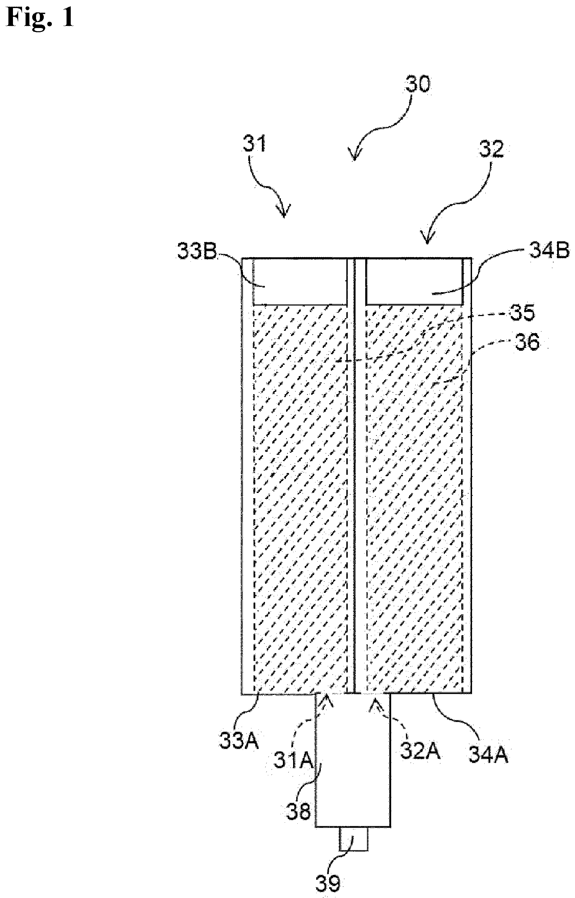

   Fig. 1 is a schematic view showing a container set according to one embodiment.
[Fig. 2]

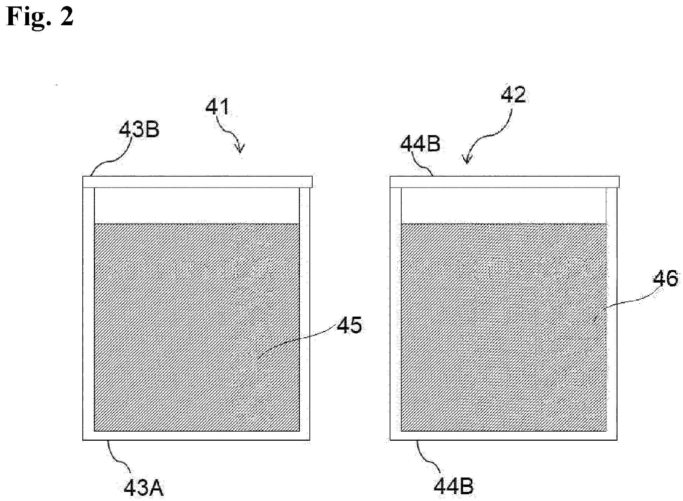

   Fig. 2 is a schematic view showing a container set according to another embodiment.
[Fig. 3]

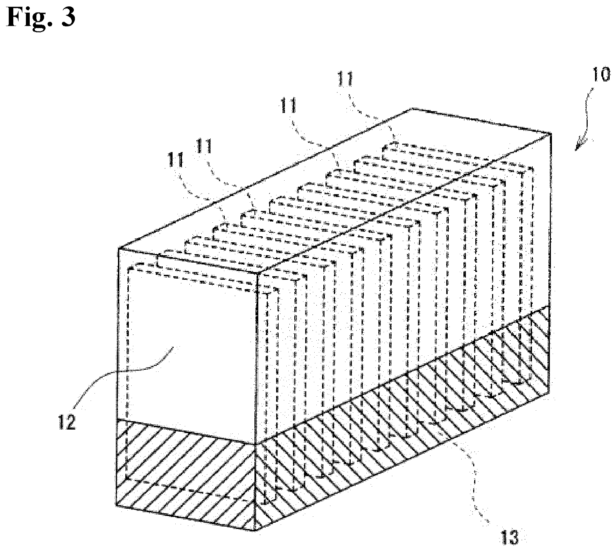

   Fig. 3 is a perspective view showing a typical configuration of a battery module according to the present invention.
[Fig. 4]

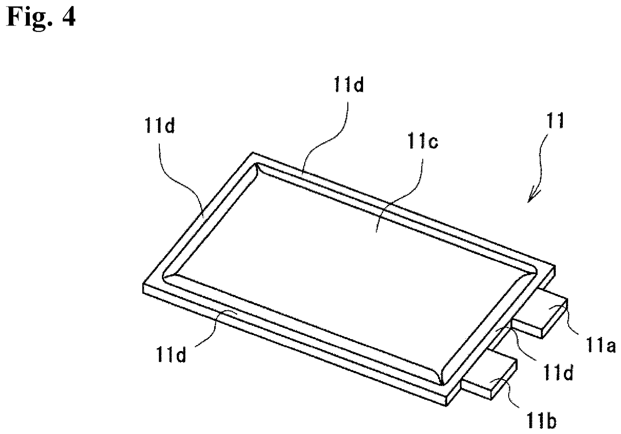

   Fig. 4 is a perspective view showing a typical configuration of a battery cell of the battery module.
[Fig. 5]

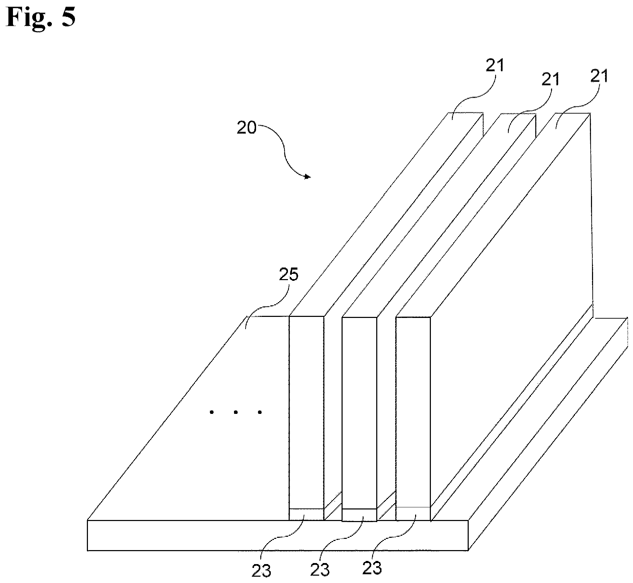

   Fig. 5 is a perspective view showing a battery assembly having a cell-to-pack structure.

### Description of Embodiments

### [Thermally Conductive Resin Composition]

Hereinafter, a thermally conductive resin composition of the present invention will be described in detail.

The thermally conductive resin composition of the present invention contains a polyfunctional epoxy resin (A), an amine curing agent (B), and a thermally conductive filler (C). Hereinafter, respective components will be described in detail.

### [Polyfunctional Epoxy Resin (A)]

The polyfunctional epoxy resin (A) used in the thermally conductive resin composition of the present invention is an epoxy resin that has an aromatic ring and is a liquid at 23°C or an epoxy resin having a molecular weight of 600 or less.

The specific polyfunctional epoxy resin (A) described above has a relatively fast reaction rate, but with being used in combination with an amine curing agent (B) having a specific structure and having a relatively slow reaction rate, which will be described below, it can have an appropriate curing rate that does not allow curing to proceed too much in the initial stage but allows sufficient curing in an appropriate time.

Therefore, since adherends are not adhered with a high adhesive force within a short period after attachment, one adherend can be peeled off from the other adherend with a relatively weak force, and problems such as deformation of the adherend in rework are unlikely to occur. In addition, after the adherend is peeled off, the residue of the thermally conductive resin composition is unlikely to remain on the adherend, and even when the residue remains, the residue can be easily removed by washing off the adherend or the like.

In addition, when the polyfunctional epoxy resin (A) is a liquid or has a low molecular weight, the viscosity of the thermally conductive resin composition is easily reduced and the workability is enhanced.

In addition, the epoxy resin (A) has a relatively fast reaction rate but is more hydrophobic than the amine curing agent (B), and thus it has high safety in terms of skin permeability.

The polyfunctional epoxy resin (A) has two or more epoxy groups. The thermally conductive resin composition can appropriately form crosslinks, and thus can easily increase the adhesive strength due to containing the polyfunctional epoxy resin (A).

Examples of polyfunctional epoxy resins (A) include bifunctional or trifunctional epoxy resins, and a bifunctional epoxy resin is preferably used. In addition, it is also preferable to use bifunctional and trifunctional epoxy resins in combination. Here, when a trifunctional epoxy resin is used, crosslinks are easily formed due to the branched structure of the epoxy resin, and the adhesive strength is easily enhanced.

When the epoxy resin contains a trifunctional epoxy resin, the content of the trifunctional epoxy resin with respect to all epoxy resins contained in the thermally conductive resin composition is preferably 10 mass% or more and more preferably 30 mass% or more, and may be 100 mass% or less, is preferably 70 mass% or less, and more preferably 50 mass% or less.

Specific examples of polyfunctional epoxy resins (A) include, but are not limited to, for example, polyfunctional epoxy resins having an aromatic ring such as an epoxy resin having a bisphenol skeleton, a resorcinol type epoxy resin, an epoxy resin having a naphthalene skeleton, an epoxy resin having a biphenyl skeleton, and a phenol novolac type epoxy resin.

In addition, examples of polyfunctional epoxy resins (A) include epoxy resins having an alicyclic skeleton such as an epoxy resin having a dicyclopentadiene skeleton and an epoxy resin having an adamantane skeleton, and aliphatic epoxy resins such as alkyl polyol polyglycidyl ether, for example, alkyldiol diglycidyl ether, and polyalkylene glycol diglycidyl ether.

Examples of epoxy resins having a bisphenol skeleton described above include epoxy resins having a bisphenol A typed, bisphenol F typed or bisphenol S typed bisphenol skeleton. Examples of resorcinol type epoxy resins include resorcinol diglycidyl ether.

Examples of epoxy resins having a naphthalene skeleton include 1,2-diglycidylnaphthalene, 1,5-diglycidylnaphthalene, 1,6-diglycidylnaphthalene, 1,7-diglycidylnaphthalene, 2,7-diglycidylnaphthalene, triglycidylnaphthalene, and 1,2,5,6-tetraglycidylnaphthalene.

Examples of epoxy resins having a biphenyl skeleton include 4,4'-diglycidylbiphenyl, and 4,4'-diglycidyl-3,3',5,5'-tetramethylbiphenyl.

Examples of epoxy resins having a dicyclopentadiene skeleton include dicyclopentadiene dioxide and phenol novolac epoxy resins having dicyclopentadiene skeletons. Examples of epoxy resins having an adamantane skeleton include 1,3-bis(4-glycidyloxyphenyl)adamantane and 2,2-bis(4-glycidyloxyphenyl)adamantane.

Examples of alkyldiol diglycidyl ethers include ethylene glycol diglycidyl ether, propylene glycol diglycidyl ether, 1,4-butanediol diglycidyl ether, pentylene glycol diglycidyl ether, hexylene glycol diglycidyl ether, cyclohexanedimethanol diglycidyl ether, and neopentyl glycol diglycidyl ether.

In addition, examples of alkyl polyol polyglycidyl ethers other than alkyldiol diglycidyl ether include trimethylolpropane polyglycidyl ether.

In addition, examples of polyalkylene glycol diglycidyl ethers include polytetramethylene glycol diglycidyl ether, polyethylene glycol diglycidyl ether, and polypropylene glycol diglycidyl ether.

Here, when the epoxy resin has a polyoxyalkylene structure such as polyalkylene glycol diglycidyl ether, it may be a mixture of compounds with different molecular weights when, for example, two or more compounds with different numbers of oxyalkylene repeating units are included. However, in such a case, the molecular weight is the average molecular weight of the mixture. The same applies to the amine curing agent (B) to be described below.

In addition, a hydrogenated product or modified product of the epoxy resins exemplified above can also be used as the epoxy resin (A).

As the polyfunctional epoxy resin having an aromatic ring used as the polyfunctional epoxy resin (A), among the above examples, an epoxy resin having a phenyl group is more preferable, and particularly a bisphenol type epoxy resin, which is an epoxy resin having a bisphenol skeleton, is still more preferable. In addition, the aliphatic polyfunctional epoxy resin used as the polyfunctional epoxy resin (A) is preferably polyalkylene glycol diglycidyl ether. In addition, alkyl polyol polyglycidyl ether is also preferable.

In the epoxy resin (A), the polyfunctional epoxy resins may be used alone or two or more thereof may be used in combination.

The epoxy equivalent of the polyfunctional epoxy resin (A) is, for example, 500 g/eq or less, preferably 400 g/eq or less, and more preferably 300 g/eq or less, and preferably 100 g/eq or more, more preferably 125 g/eq or more, and still more preferably 140 g/eq or less.

The polyfunctional epoxy resin (A) is an epoxy resin that has an aromatic ring and is a liquid at 23°C or an epoxy resin having a molecular weight of 600 or less, and each epoxy resin (A) is preferably an epoxy resin that is a liquid at 23°C and has a molecular weight of 600 or less.

As described above, the molecular weight of the polyfunctional epoxy resin (A) is preferably 600 or less, preferably 550 or less, more preferably 450 or less, and still more preferably 400 or less. In addition, the molecular weight of the epoxy resin (A) is, for example, 100 or more, preferably 150 or more, more preferably 200 or more, and still more preferably 250 or more.

Here, the thermally conductive resin composition may contain an epoxy resin other than the above polyfunctional epoxy resin (A) as the epoxy resin. Examples of such epoxy resins other than the polyfunctional epoxy resin (A) include a monofunctional epoxy resin (a1) to be described below, a solid polyfunctional aromatic epoxy resin having a molecular weight of more than 600, and a polyfunctional aliphatic epoxy resin having a molecular weight of more than 600.

In consideration of a curing rate, the content of the specific polyfunctional epoxy resin (A) described above in the thermally conductive resin composition with respect to a total amount of the epoxy resins contained in the thermally conductive resin composition may be 50 mass% or more, is preferably 60 mass% or more and 100 mass% or less, more preferably 70 mass% or more and 100 mass% or less, and still more preferably 90 mass% or more and 100 mass% or less. The thermally conductive resin composition may not contain an epoxy resin other than the polyfunctional epoxy resin (A), and therefore the content of the polyfunctional epoxy resin (A) can be 100 mass%.

### (Monofunctional Epoxy Resin (a1))

More preferably, the epoxy resin contained in the thermally conductive resin composition further contains a monofunctional epoxy resin (a1) in addition to the polyfunctional epoxy resin (A). When the thermally conductive resin composition further contains the monofunctional epoxy resin (a1), the crosslink density of the cured thermally conductive resin composition is prevented from becoming too high, adhesion is enhanced, and it is easier to increase the elongation of the cured product of the thermally conductive resin composition. In addition, when the monofunctional epoxy resin is used, the viscosity of the thermally conductive resin composition before curing is easily reduced.

However, for example, when the crosslink density is controlled by another means, such as using a curing agent having a small number of active hydrogen atoms in one molecule (for example, diamines having two primary amino groups), the elongation is easily increased even without using a monofunctional epoxy resin.

When the polyfunctional epoxy resin (A) and the monofunctional epoxy resin (a1) are used in combination, the mass ratio (monofunctional/polyfunctional) of the monofunctional epoxy resin (a1) to the polyfunctional epoxy resin (A) is preferably 10/90 or more and 50/50 or less, more preferably 15/85 or more and 40/60 or less, and still more preferably 20/80 or more and 35/65 or less.

In consideration of reducing reactivity and handling properties, the monofunctional epoxy resin (a1) is preferably an epoxy resin that has an aromatic ring and is a liquid at 23°C or an epoxy resin having a molecular weight of 600 or less, and more preferably an epoxy resin that is a liquid at 23°C and has a molecular weight of 600 or less.

The molecular weight of the monofunctional epoxy resin (a1) is preferably 600 or less, preferably 550 or less, more preferably 450 or less, and still more preferably 400 or less. In addition, the molecular weight of the monofunctional epoxy resin is, for example, 100 or more, preferably 150 or more, more preferably 200 or more, and still more preferably 250 or more.

Examples of monofunctional epoxy resins (a1) include monofunctional epoxy resins having an aromatic ring such as phenyl-based glycidyl ethers exemplified by phenyl glycidyl ether and alkylphenyl glycidyl ethers represented by 4-t-butylphenyl glycidyl ether, cresyl glycidyl ether, and nonylphenyl glycidyl ether, 1-glycidylnaphthalene and 2-glycidylnaphthalene.

In addition, as the monofunctional epoxy resin (a1), an aliphatic monofunctional epoxy resin can be used, and specific examples thereof include glycidyl ethers of aliphatic alcohol. Here, the aliphatic alcohol may have a branched structure or a linear structure, but the linear structure is preferable in order to enhance elongation. In addition, the aliphatic alcohol may have, for example, about 4 to 24 carbon atoms, and preferably has 10 to 20 carbon atoms in order to enhance elongation. In addition, the aliphatic alcohol is preferably a saturated aliphatic alcohol in order to enhance elongation. Specific examples of the glycidyl ethers of aliphatic alcohol include butyl glycidyl ether, decyl glycidyl ether, lauryl glycidyl ether, myristyl glycidyl ether, cetyl glycidyl ether, and stearyl glycidyl ether. The monofunctional epoxy resin may be other than those exemplified above, and examples thereof include monofunctional epoxy resins having a glycidyl group but having no ether group such as 1,2-epoxybutane and a propylene oxide.

As the monofunctional epoxy resin (a1), in consideration of high safety of raw materials, ease of handling properties, and favorable elongation, an aliphatic monofunctional epoxy resin is preferably used, and particularly a glycidyl ether of aliphatic alcohol is preferably used.

The monofunctional epoxy resins (a1) may be used alone or two or more thereof may be used in combination.

The epoxy equivalent of the monofunctional epoxy resin (a1) is, for example, 800 g/eq or less, preferably 450 g/eq or less, more preferably 400 g/eq or less, and still more preferably 350 g/eq or less, and preferably 100 g/eq or more, more preferably 140 g/eq or more, and still more preferably 180 g/eq or more.

In order to enhance adhesive strength and mechanical strength, the epoxy resin preferably contains an epoxy resin having an aromatic ring, particularly a phenyl group. The epoxy resin having an aromatic ring such as a phenyl group may be a monofunctional epoxy resin (a1) or a polyfunctional epoxy resin (A), but is preferably a polyfunctional epoxy resin (A).

In addition, in order to enhance elongation, it is also preferable to use an aliphatic epoxy resin. The aliphatic epoxy resin may be a monofunctional epoxy resin (al) or a polyfunctional epoxy resin (A).

In addition, an aliphatic epoxy resin and an epoxy resin having an aromatic ring may be used in combination, and for example, an epoxy resin having an aromatic ring may be used as the polyfunctional epoxy resin (A), and an aliphatic epoxy resin may be used as the monofunctional epoxy resin (a1). In addition, an aliphatic epoxy resin may be used as both the polyfunctional epoxy resin (A) and the monofunctional epoxy resin.

### [Amine Curing Agent]

The amine curing agent (B) of the present invention has an amino group (b1) selected from the group consisting of primary amino groups and secondary amino groups. Here, the amino group (b1) is one in which carbon atom(s) (hereinafter referred to as "α carbon atom(s)") bonded to the nitrogen atom constituting the amino group (b1) do not form a ring structure and at least one of the α carbon atom(s) is bonded to another carbon atom and an atom other than a hydrogen atom.

As described above, in the amine curing agent (B) having the above configuration, α carbon atom(s) do not form a ring structure, and at least one of the α carbon atom(s) is bonded to a carbon atom and an atom other than a hydrogen atom. Therefore, steric hindrance occurs around the amino group, the reaction of the amino group (b1) with respect to the epoxy resin is inhibited, and thus the amine curing agent (B) has an appropriate reaction rate. Therefore, as described above, with being used in combination with the specific epoxy resin (A), it can have an appropriate curing rate that does not allow curing to proceed too much in the initial stage but allows complete curing in an appropriate time. In addition, since the amino group (b1) is highly hydrophilic, it generally tends to be highly irritating to skin and to have low safety. However, because the activity is inhibited as described above, the irritation is reduced and the safety is increased, and thus handling properties of the thermally conductive resin composition containing the amine curing agent (B) are enhanced.

The number of amino groups in the amine curing agent (B) may be 2 or more, and is more preferably 3 or more. In addition, the number of amino groups is, for example, 6 or less, preferably 5 or less, and more preferably 4 or less. With the amine curing agent (B) having two or more amino groups, the polyfunctional epoxy resin (A) is easily cured appropriately.

In addition, the amino group (b1) of the amine curing agent (B) may be a primary amino group or a secondary amino group, but the amine curing agent (B) preferably has at least a primary amino group. When the amine curing agent (B) has a primary amino group, this makes it easier to adjust the curing rate with the epoxy resin more appropriately and to increase the adhesive strength when completely cured. In this regard, the amine curing agent preferably has two or more primary amino groups in one molecule, more preferably has two primary amino groups and additionally has one or more reactive amino groups in one molecule, and still more preferably has, particularly three or more primary amino groups in one molecule. Here, when the amine curing agent has two primary amino groups and additionally has one or more reactive amino groups (particularly three or more primary amino groups) in one molecule, it is easier to form branched structures and crosslinks. The number of primary amino groups in one molecule in the amine curing agent is, for example, 6 or less, preferably 5 or less, and more preferably 4 or less. The number of primary amino groups is preferably either 2 or 3 in order to prevent crosslinking from proceeding too much and achieve an appropriate curing rate.

Here, when an amine curing agent having three or more primary amino groups is used, the content of the amine curing agent having three or more primary amino groups with respect to all amines contained in the thermally conductive resin composition is preferably 30 mass% or more, more preferably 50 mass% or more, and may be 100 mass% or less.

In addition, in the present invention, in order to achieve an appropriate crosslink density and an appropriate curing rate, it is preferable to use at least one of a trifunctional epoxy resin as the polyfunctional epoxy resin (A) or an amine having three or more (particularly three) primary amino groups as the amine curing agent (B). Here, when a trifunctional epoxy resin is used as the polyfunctional epoxy resin (A), it is preferable to use one having two amino groups in one molecule as the amine curing agent (B) in order to achieve an appropriate curing rate and crosslink density. Similarly, when a bifunctional epoxy resin is used as the polyfunctional epoxy resin (A), it is preferable to use one having three or more (particularly three) amino groups in one molecule as the amine curing agent (B) in order to achieve an appropriate curing rate and crosslink density.

In addition, the amino group (b1) of the amine curing agent (B) may consist of a secondary amino group or may consist of a primary amino group, but a primary amino group and a secondary amino group may be mixed. When a primary amino group and a secondary amino group are mixed, the amine curing agent (B) having both a primary amino group and a secondary amino group in one molecule may be used, or a compound having only a primary amino group in the molecule and a compound having only a secondary amino group in the molecule may be used in combination, or these may be combined.

In the amine curing agent (B), the ratio of the number of primary amino groups to a total number of primary amino groups and secondary amino groups [primary/(primary+secondary)] is, for example, 10/100 or more and 100/100 or less, preferably 25/100 or more and 100/100 or less, more preferably 50/100 or more and 100/100 or less, and still more preferably 60/100 or more and 100/100 or less. When the amine curing agent (B) contains a certain proportion or more of primary amino groups, it becomes easier to appropriately adjust the curing rate.

In order to make the curing proceed appropriately, the amine curing agent (B) may have two or more active hydrogen atoms of amino groups (b1) in one molecule, but in order to make the curing rate more appropriate, it is preferable to have three or more active hydrogen atoms in one molecule. The number of active hydrogen atoms of amino groups (b1) contained in one molecule is preferably 4 or more, more preferably 5 or more, and still more preferably 6 or more. In addition, the number of active hydrogen atoms of amino groups (b1) in one molecule in the amine curing agent (B) is not particularly limited, and may be, for example, 12 or less, and is preferably 10 or less, and more preferably 8 or less.

The molecular weight of the amine curing agent (B) is not particularly limited, and is, for example, 3,000 or less, preferably 1,000 or less, more preferably 700 or less, and still more preferably 500 or less. When an amine curing agent (B) having a molecular weight of a certain value or less is used, the viscosity of the thermally conductive resin composition can be reduced and the thermally conductive filler (C) can also be highly packed. In addition, it is easier to achieve appropriate reactivity with the epoxy resin.

In addition, an amine curing agent (B) having a molecular weight of, for example, 100 or more, preferably 110 or more, more preferably 200 or more, and still more preferably 300 or more, may be used. When the amine curing agent has a molecular weight of a certain value or more, it is possible to prevent the crosslink density from becoming higher than necessary, and it is easier to enhance the elongation and adhesive force. In addition, it is easier to achieve appropriate reactivity with the epoxy resin. Here, the amine curing agent may be a liquid at room temperature (25°C).

Here, the molecular weight of the amine curing agent and the epoxy resin can be measured by, for example, a mass spectrometer (GC-MS or LC-MS).

The active hydrogen equivalent of the amine curing agent is not particularly limited, and is, for example, 25 g/eq or more, preferably 40 g/eq or more, and more preferably 50 g/eq or more, and is, for example, 1,000 g/eq or less, preferably 600 g/eq or less, more preferably 300 g/eq or less, and still more preferably 200 g/eq or less.

As described above, for the amino group (b1) in the amine curing agent (B), carbon atom(s) (also referred to as α carbon atom(s)) bonded to the nitrogen atom constituting the amino group (b1) do not form a ring structure, and at least one of the α carbon atoms is bonded to another carbon atom and an atom other than a hydrogen atom. Here, the amino group (b1) linked to such α carbon atom(s) is also called a specific amino group.

Here, all of the amino groups (b1) in the amine curing agent (B) may be specific amino groups, or some of the amino groups (1) may be specific amino groups. However, for example, 50% or more, preferably 65% or more, and more preferably 75% or more of the amino groups (b1) contained in the amine curing agent (B) may be specific amino groups.

As described above, the specific amino group may be either a primary amino group or a secondary amino group, but is preferably a primary amino group. Further, a primary amino group and a secondary amino group may be mixed at a ratio described above.

When the specific amino group is a secondary amino group, it is favorable that there are two α carbon atoms bonded to the nitrogen atom thereof, the two α carbon atoms do not form a ring structure, and at least one of the α carbon atoms is bonded to another carbon atom and an atom other than a hydrogen atom.

On the other hand, when the specific amino group is a primary amino group, it is favorable that there is one α carbon atom thereof, and the one α carbon atom does not form a ring structure and is bonded to another carbon atom and an atom other than a hydrogen atom.

Here, examples of atoms other than a hydrogen atom include a carbon atom and heteroatoms such as a nitrogen atom, a sulfur atom, and a phosphorus atom, and among these, a carbon atom and an oxygen atom are preferable, and a carbon atom is more preferable. Therefore, the α carbon atom is preferably bonded to at least two carbon atoms, and particularly the α carbon atom is more preferably bonded to two carbon atoms and one hydrogen atom.

Here, the oxygen atom preferably constitutes either a hydroxyl group or an ether bond.

Specifically, the α carbon atom bonded to the nitrogen atom preferably has a structure represented by the following Formula (1). 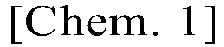 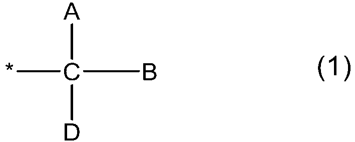 (in Formula (1), * indicates a bonding position with the nitrogen atom constituting the amino group, C is an α carbon atom, A, B, and D represent atoms bonded to the α carbon atom, A is a carbon atom, B is a carbon atom or a heteroatom, and D is any of a hydrogen atom, a carbon atom, and a heteroatom)

Here, the heteroatoms for B and D are preferably any of an oxygen atom, a nitrogen atom, a sulfur atom, and a phosphorus atom, and more preferably an oxygen atom. The oxygen atom is preferably an oxygen atom constituting a hydroxyl group or an ether bond.

In addition, more specifically, an embodiment in which two of A, B, and D are carbon atoms, and one of them is a hydrogen atom, and an embodiment in which one of A, B, and D is a carbon atom, one of them is an oxygen atom, and the remaining one is a hydrogen atom are preferable, and among these embodiments, the embodiment in which two of A, B, and D are carbon atoms, and one of them is a hydrogen atom is more preferable.

More specifically, the α carbon atom bonded to the nitrogen atom preferably has a structure represented by the following Formula (1-1).

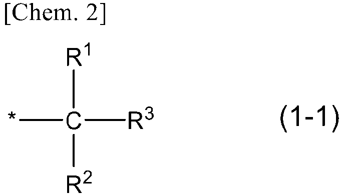

In Formula (1-1), * indicates a bonding position with the nitrogen atom constituting the amino group. C is an α carbon atom. R¹ is any of an alkyl group having 1 to 20 carbon atoms, a hydroxyl group, and an alkoxy group having 1 to 20 carbon atoms, R² is a hydrogen atom, an alkyl group having 1 to 20 carbon atoms, a hydroxyl group, or an alkoxy group having 1 to 20 carbon atoms, and R³ is an organic group in which the atom bonded to the α carbon atom is a carbon atom.

The alkyl group is preferably an alkyl group having 1 to 10 carbon atoms, more preferably an alkyl group having 1 to 4 carbon atoms, and still more preferably a methyl group.

The alkoxy group is preferably an alkoxy group having 1 to 10 carbon atoms, more preferably an alkoxy group having 1 to 4 carbon atoms, and still more preferably a methoxy group.

The alkyl groups for R¹ and R² may be linear or may have at least one of a branched structure or a ring structure. Examples of alkyl groups for R¹ and R² include a methyl group, an ethyl group, an n-propyl group, an isopropyl group, an n-butyl group, an isobutyl group, a sec-butyl group, a tert-butyl group, various pentyl groups, various hexyl groups, various heptyl groups, various octyl groups, various nonyl groups, various decyl groups, various undecyl groups, various dodecyl groups, various tridecyl groups, various tetradecyl groups, various pentadecyl groups, various hexadecyl groups, various heptadecyl groups, and various octadecyl groups. Here, "various" means various isomers including sec-, tert-, iso- and the like in addition to linear (n-), and the same applies below. In addition, the alkyl group may have a ring structure such as a cyclohexyl group.

The alkoxy groups for R¹ and R² are not particularly limited, and examples thereof include a methoxy group, an ethoxy group, an n-propoxy group, an isopropoxy group, an n-butoxy group, a sec-butoxy group, and a tert-butoxy group.

Among these, R¹ is preferably either an alkyl group or a hydroxyl group, more preferably a methyl group or a hydroxyl group, and still more preferably a methyl group. On the other hand, R² is preferably either an alkyl group or a hydrogen atom, more preferably a methyl group or a hydrogen atom, and still more preferably a hydrogen atom.

Among the above examples, in Formula (1-1), preferably, R¹ is a methyl group or a hydroxyl group and R² is a hydrogen atom, and particularly preferably, R¹ is a methyl group and R² is a hydrogen atom.

More specifically, the organic group for R³ may be an organic group linked to one, two or more other amino groups (b1) or may be an organic group not linked to other amino groups (b1).

Examples of organic groups not linked to other amino groups (b1) for R³ include an organic group having 1 to 25 carbon atoms, and preferably include a hydrocarbon group having 1 to 25 carbon atoms which may have a halogen atom, a hydroxyl group, a carbonyl group, an ether bond, or an ester bond. The number of carbon atoms of the organic group not linked to other amino groups (b1) is preferably 2 to 13, and more preferably 3 to 7.

Specific examples of organic groups not linked to other amino groups include groups represented by the following Formulae (2-1) and (2-2).

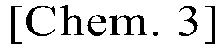

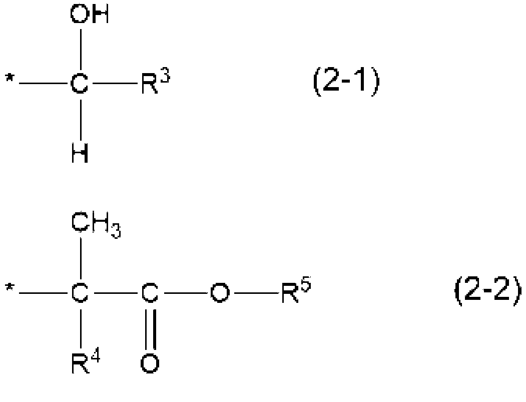

In Formula (2-1), R³ is a hydrocarbon group having 1 to 25 carbon atoms which may have a halogen atom, a hydroxyl group, a carbonyl group, an ether bond, or an ester bond, and R³ is preferably an alkyl group or a saturated aliphatic hydrocarbon group having an ether bond. In addition, R³ preferably has 2 to 13 carbon atoms, and more preferably 3 to 7 carbon atoms.

In Formula (2-2), R⁴ is a hydrogen atom or a methyl group. R⁵ is, for example, a hydrocarbon group having 1 to 22 carbon atoms which may have a halogen atom, a hydroxyl group, a carbonyl group, an ether bond, an ester bond or the like and is preferably an alkyl group. R⁵ preferably has 1 to 18 carbon atoms, more preferably has 1 to 12 carbon atoms, and still more preferably has 1 to 8 carbon atoms. Here, specific examples of alkyl groups for R³ and R⁵ are as described above. In addition, the saturated aliphatic hydrocarbon group having an ether bond for R³ is preferably a group derived from a glycidyl ether type epoxy compound to be described below, and is, for example, a group represented by -CH₂CH₂-O-R³¹. Here, R³¹ is an alkyl group having 1 to 23 carbon atoms, and the number of carbon atoms of R is preferably 3 to 16 carbon atoms, more preferably 3 to 10 carbon atoms, and still more preferably 3 to 6 carbon atoms.

In addition, examples of organic groups linked to other amino groups include an organic group having about 1 to 100 carbon atoms, and an organic group having 2 to 50 carbon atoms is preferable, and an organic group having 2 to 30 carbon atoms is more preferable.

Examples of organic groups linked to other amino groups include a hydrocarbon group which may have a halogen atom, a hydroxyl group, a carbonyl group, an ether bond, or an ester bond, and a hydrocarbon group which may have an ether bond is preferable. Particularly, an organic group linked to other amino groups preferably has an oxyalkylene structure.

When R³ in Formula (1-1) is an organic group linked to other amino groups, the α carbon atom preferably has a structure represented by the following Formula (3), and particularly, more preferably forms a part of the oxypropylene structure as shown in the following Formula (3-1).

In addition, when the α carbon atom has a structure represented by the following Formula (3), R³ as the organic group linked to other amino groups is preferably a saturated aliphatic hydrocarbon group which may have an ether bond. The saturated aliphatic hydrocarbon group which may have an ether bond preferably has 1 to 48 carbon atoms and more preferably 2 to 28 carbon atoms. In addition, the ether bond may be formed by an oxygen atom of an oxyalkylene, preferably an oxypropylene. 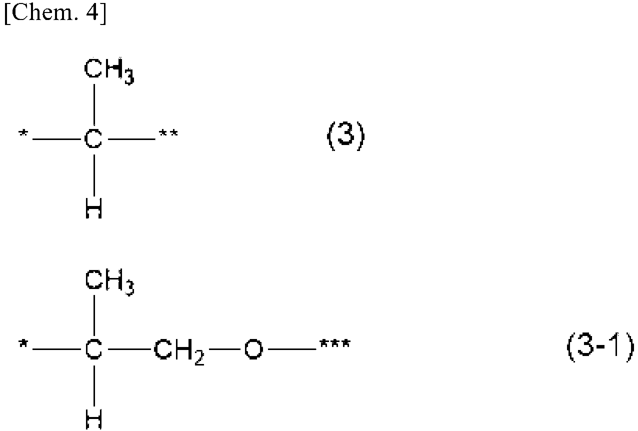 (in Formulae (3) and (3-1), * indicates a bonding position with the nitrogen atom of the amino group, ** indicates a bonding position with the organic group represented by R³, and *** indicates a bonding position with the residual moiety of the organic group represented by R³)

When the organic group linked to other amino groups has an oxyalkylene structure, it preferably has a structure represented by the following Formula (4-1) or a structure represented by the following Formula (4-2).

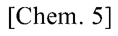

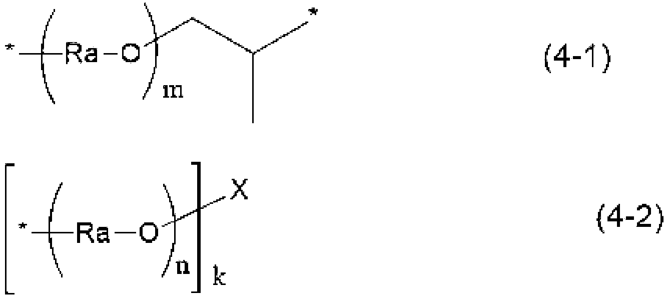

In Formulae (4-1) and (4-2), * indicates a bonding position with the nitrogen atom of the amino group (b1), m is an integer of 1 to 30, k is an integer of 2 to 6, n is an integer of 1 or more, and n×k is an integer of 2 to 30. X is a hydrocarbon group having 2 to 10 carbon atoms which has 2 to 6 bonding moieties and may have an oxygen atom. In addition, Ra is an alkylene group.

The alkylene group for Ra is preferably an alkylene group having 2 to 4 carbon atoms, and preferably an ethylene group, a propylene group, or a tetramethylene group.

In Formula (4-1), Ra bonded to the nitrogen atom of the amino group is preferably a propylene group. In addition, in Formula (4-2), at least one Ra bonded to the nitrogen atom of the amino group is a propylene group, and all of them are preferably a propylene group. In addition, the propylene group here is preferably -CHCH₃-CH₂- (the bond on the right side is the bonding position with an oxygen atom).

m is preferably 2 to 20, and more preferably 3 to 10. In addition, k is preferably 2 to 4, and more preferably 2 to 3. In addition, n×k is preferably 2 to 20, and more preferably 3 to 10. The oxygen atom contained in X is preferably an ether bond.

The hydrocarbon group which has two bonding moieties and may have an oxygen atom for X is preferably an aliphatic hydrocarbon group, and examples thereof include an ethylene group, a propylene group, a butylene group, a pentylene group, a hexylene group, a heptylene group, an octylene group, a nonylene group, a decylene group, a cyclopentylene group, and a cyclohexylene group. In addition, those other than the aliphatic hydrocarbon group may be used, and examples thereof include residues obtained by removing hydroxyl groups from bisphenols such as biphenol, bisphenol F, and bisphenol A. In addition, the hydrocarbon group which has 3 to 6 bonding moieties and may have an oxygen atom is preferably an aliphatic hydrocarbon group or an aliphatic hydrocarbon group which may have an ether bond, and examples thereof include residues obtained by removing hydroxyl groups from polyhydric alcohols such as trimethylolpropane, glycerin, pentaerythritol, sorbitol, trihydroxycyclohexane, and dipentaerythritol.

X is preferably a hydrocarbon group having 2 to 6 carbon atoms, and particularly, preferably a saturated aliphatic hydrocarbon group having 2 to 6 carbon atoms.

In addition, the organic group linked to other amino groups preferably has an oxypropylene structure, and specifically, preferably has a structure represented by the following Formula (4-3) or a structure represented by the following Formula (4-4). 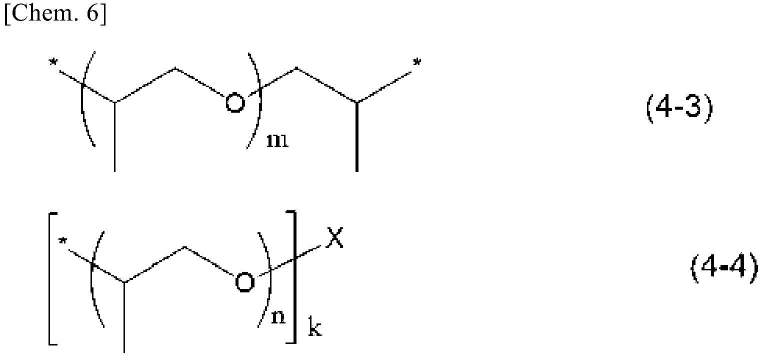 In Formulae (4-3) and (4-4), *, m, k, n, and X are as described above.

Among the above examples, the nitrogen atom of the amino group (b1) of the amine curing agent (B) is preferably bonded to at least the α carbon atom represented by Formula (3), particularly, more preferably bonded to the α carbon atom represented by Formula (3-1), still more preferably bonded to the structure represented by Formula (4-1) or Formula (4-2), and particularly preferably bonded to the structure represented by Formula (4-3) or Formula (4-4). In addition, in this case, when the amino group (b1) is a secondary amino group, it is also preferable that any structure represented by Formula (2-1) or Formula (2-2) be additionally bonded to the amino group (b1).

Therefore, the amine curing agent (B) is more preferably an amine having a structure represented by the following Formula (5-1) or Formula (5-2).

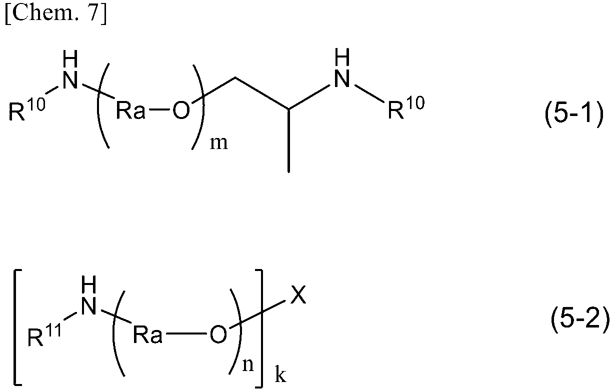

In Formula (5-1), m and Ra are as described above. Each R¹⁰ is independently a hydrogen atom or a group represented by Formula (2-1) or Formula (2-2). In Formula (5-1), Ra is preferably a propylene group. In addition, R¹⁰ is preferably a hydrogen atom.

In Formula (5-2), n, k, and Ra are as described above. Each R¹¹ is independently a hydrogen atom, a group represented by Formula (2-1), or a group represented by Formula (2-2). In Formula (5-2), Ra is preferably a propylene group. R¹¹ is preferably a hydrogen atom. Here, in Formulae (5-1) and (5-2), the propylene group may be -CHCH₃-CH₂- (the bond on the right side is the bonding position with an oxygen atom).

The amine curing agent (B) is preferably an aliphatic amine. As the specific amine curing agent (B), polyoxyalkylene polyamines or modified products thereof are preferably used, and particularly poly(oxyalkylene)diamines such as poly(oxypropylene)diamine, poly(oxyethylene/oxypropylene)diamine, and poly(oxypropylene/oxytetramethylene)diamine, and polyol poly(oxyalkylene) polyamines such as trimethylolpropane poly(oxypropylene)triamine, glyceryl poly(oxypropylene)triamine, and pentaerythritolpoly(oxypropylene) tetraamine may be exemplified. Among these, polyoxypropylene polyamines such as poly(oxypropylene)diamine and polyol poly(oxypropylene) polyamine, or modified products thereof are preferable.

Here, in these compounds, polyoxyalkylene polyamines other than polyoxypropylene polyamines may also have an oxypropylene structure bonded to the nitrogen atom of the amino group (b1) as shown in Formula (3-1).

Examples of modified products of polyoxyalkylene polyamines include epoxy modified products and acrylate modified products. The epoxy modified products can be obtained by reacting at least a part of the primary amino group of the polyoxyalkylene polyamines with an epoxy group. In this case, the amino group becomes a secondary amino group, and the group represented by Formula (2-1) may be bonded to the amino group.

The acrylate modified product can be obtained by bonding a carbon atom constituting a carbon-carbon double bond in a (meth)acryloyl group to at least a part of the primary amino group of the polyoxyalkylene polyamines. In this case, the amino group becomes a secondary amino group, and the group represented by Formula (2-2) may be bonded to the amino group.

The compound used for epoxy modification is not particularly limited as long as it is a compound having an epoxy group, and examples thereof include oxirane, alkyl oxirane, glycidyl ether type epoxy compounds, and glycidyl ester type epoxy compounds, and among these, a glycidyl ether type epoxy compound is preferable in consideration of reactivity. The glycidyl ether type epoxy compound is preferably glycidyl ether of aliphatic alcohol, and examples of glycidyl ethers of aliphatic alcohol include ethyl glycidyl ether, propyl glycidyl ether, butyl glycidyl ether, hexyl glycidyl ether, 2-ethylhexyl glycidyl ether, octyl glycidyl ether, and decyl glycidyl ether.

In addition, the (meth)acrylate is preferably, for example, alkyl (meth)acrylate. Examples of alkyl (meth)acrylates include alkyl (meth)acrylates having the alkyl group with about 1 to 18 carbon atoms. The alkyl group may be linear or may have at least one of a branched structure or a ring structure. Specific examples of alkyl (meth)acrylates include methyl (meth)acrylate, ethyl (meth)acrylate, propyl (meth)acrylate, n-butyl (meth)acrylate, isobutyl (meth)acrylate, tert-butyl (meth)acrylate, 2-ethylhexyl (meth)acrylate, n-octyl (meth)acrylate, isooctyl (meth)acrylate, isononyl (meth)acrylate, isomyristyl (meth)acrylate, stearyl (meth)acrylate, cyclohexyl (meth)acrylate, and isobornyl (meth)acrylate.

Here, the thermally conductive resin composition may contain, as an amine, an amine other than the amine curing agent (B) (hereinafter referred to as "other amines") as long as the effects of the present invention are exhibited. Examples of other amines include those which have a primary amino group or a secondary amino group, and in which the carbon atom (α carbon atom) bonded to the amino group forms a ring structure, or all α carbon atom(s) bonded to the amino group of the amine is bonded to two or more hydrogen atoms. In addition, examples of other amines include those composed of only a tertiary amino group.

Examples of other amines include polyamines such as diamines and triamines. In addition, the other amines may be aliphatic amines or aromatic ring-containing amines. Specific examples of aliphatic amines include, but are not limited to these, polyoxyethylene diamine, branched or linear alkanediamines such as 1,6-hexanediamine, 1,8-octanediamine, 1,9-nonanediamine, 1,10-decanediamine, 1,11-undecanediamine, 1,12-dodecanediamine, 2-methyl-1,5-diaminopentane, 2-methyl-1,8-octanediamine, 2-methyl-1,9-nonanediamine, and 2,7-dimethyl-1,8-octanediamine, and alicyclic polyamines such as 1,3-bis(aminomethyl)cyclohexane, 1,4-bis(aminomethyl)cyclohexane, cyclohexane diamine, methylcyclohexane diamine, isophorone diamine, and 4,4'-methylenebis(N-sec-butyl cyclohexaneamine).

In addition, the aromatic ring-containing amine may be an aromatic amine in which an amino group is directly bonded to an aromatic ring such as m-phenylenediamine, p-phenylenediamine, tolylene-2,4-diamine, tolylene-2,6-diamine, mesitylene-2,4-diamine, mesitylene-2,6-diamine, 3,5-diethyl tolylene-2,4-diamine, 3,5-diethyl tolylene-2,6-diamine, biphenylenediamine, 4,4-diaminodiphenylmethane, 2,5-naphthylenediamine, and 2,6-naphthylenediamine, or an amine in which an amino group is not directly bonded to an aromatic ring such as m-xylylenediamine, p-xylylenediamine, or a reaction product of m-xylylenediamine with styrene.

In addition, examples of other amine include monoamines having only one amino group. Specific examples thereof include, but are not limited to, methoxypoly (oxyethylene/oxypropylene)-2-propylamine, diglycolamine, N-methylethanolamine, 3-butoxypropanolamine, ethylene glycolamine, and propylene glycolamine.

The other amines may be a liquid at 25°C in order to reduce the viscosity of the thermally conductive resin composition.

The other amines may be used alone or two or more thereof may be used in combination.

In consideration of the curing rate, the content of the amine curing agent (B) in the thermally conductive resin composition with respect to a total amount of amines contained in the thermally conductive resin composition may be 50 mass% or more, is preferably 70 mass% or more and 100 mass% or less, and more preferably 90 mass% or more and 100 mass% or less. It is preferable that the thermally conductive resin composition not contain an amine other than the amine curing agent (B), and therefore the content of the amine curing agent (B) is preferably 100 mass%.

### <Equivalent Ratio>

The equivalent ratio of active hydrogen atoms of amino groups to epoxy groups contained in the thermally conductive resin composition of the present invention (hereinafter referred to as an equivalent ratio (NH/Ep) in some cases) is preferably more than 1 and 2.7 or less. When the equivalent ratio (NH/Ep) is within the above range, the adhesive force to adherends such as resin materials such as PET and metal materials becomes favorable, and the cured product of the thermally conductive resin composition tends to have favorable elongation.

In order to achieve both adhesion and elongation, the equivalent ratio (NH/Ep) is more preferably 1.05 or more, still more preferably 1.1 or more, and yet more preferably 1.2 or more. In addition, the equivalent ratio (NH/Ep) is preferably 2.7 or less, more preferably 2.6 or less, and still more preferably 2.5 or less. Therefore, the equivalent ratio (NH/Ep) is more preferably 1.05 to 2.7, more preferably 1.1 to 2.7, still more preferably 1.1 to 2.6, and yet more preferably 1.2 to 2.5.

In the thermosetting resin composition, when the content of the tri- or higher-functional epoxy resin is less than 10% and the content of the amine curing agent having two primary amino groups and additionally having one or more reactive amino groups in one molecule is 30 mass% or more (hereinafter referred to as Condition 1), in consideration of enhancing the adhesive force or the like, the equivalent ratio (NH/Ep) is preferably more than 1, more preferably 1.20 or more, and still more preferably 1.50 or more. In addition, in Condition 1, in consideration of enhancing the adhesive force, the equivalent ratio (NH/Ep) is preferably 2.70 or less, more preferably 2.60 or less, and still more preferably 2.50 or less. Therefore, in Condition 1, the equivalent ratio (NH/Ep) is preferably more than 1 and 2.70 or less, more preferably 1.20 to 2.60, and still more preferably 1.50 to 2.50.

Here, the content of the tri- or higher-functional epoxy resin being less than 10 mass% means that less than 10 mass% of the epoxy resins within all epoxy resins contained in the thermally conductive resin composition is tri- or higher-functional (that is, has three or more epoxy groups in the molecule), and also includes the case in which the content is 0 mass%, that is, no tri- or higher-functional epoxy groups are contained.

In addition, the content of the amine curing agent having two primary amino groups and additionally having one or more reactive amino groups in one molecule being 30 mass% or more means that, within all amine curing agents contained in the thermally conductive resin composition, 30 mass% or more of the amine curing agents have, in addition to two primary amino groups, additionally one or more reactive amino groups in one molecule. Here, the reactive amino group is an amino group having an active hydrogen group, and may be either a primary amino group or a secondary amino group. Here, the same interpretation is applied to the following conditions 2 to 4, and similar expressions are also interpreted in the same manner.

In the thermosetting resin composition, when the content of the tri- or higher-functional epoxy resin is 10 mass% or more, and the content of the amine curing agent having two primary amino groups and additionally having one or more reactive amino groups in one molecule is less than 30 mass% (hereinafter referred to as Condition 2), in consideration of enhancing the adhesive force or the like, the equivalent ratio (NH/Ep) is preferably more than 1, more preferably 1.05 or more, still more preferably 1.10 or more, and yet more preferably 1.20 or more. In Condition 2, in consideration of enhancing the adhesive force and elongation or the like, the equivalent ratio (NH/Ep) is, for example, 2.20 or less, preferably 2.00 or less, more preferably 1.80 or less, and still more preferably 1.60 or less. Therefore, in Condition 2, the equivalent ratio (NH/Ep) is, for example, more than 1 and 2.20 or less, preferably more than 1 and 2.00 or less, more preferably 1.05 to 1.80, still more preferably 1.10 to 1.60, and yet more preferably 1.20 to 1.60.

In the thermosetting resin composition, when the content of the tri- or higher-functional epoxy resin is 10 mass% or more and the content of the amine curing agent having two primary amino groups and additionally having one or more reactive amino groups in one molecule is 30 mass% or more (hereinafter referred to as Condition 3), the equivalent ratio (NH/Ep) is preferably more than 1, more preferably 1.05 or more, and still more preferably 1.10 or more. In Condition 3, the equivalent ratio (NH/Ep) is preferably 2.70 or less, more preferably 2.60 or less, and still more preferably 2.50 or less. Therefore, in Condition 3, the equivalent ratio (NH/Ep) is preferably more than 1 and 2.70 or less, more preferably 1.05 to 2.60, and still more preferably 1.10 to 2.50.

In the thermosetting resin composition, when the content of the tri- or higher-functional epoxy resin is less than 10 mass%, and the content of the amine curing agent having two primary amino groups and additionally having one or more reactive amino groups in one molecule is less than 30 mass% (hereinafter referred to as Condition 4), the equivalent ratio (NH/Ep) is preferably more than 1, more preferably 1.05 or more, and still more preferably 1.10 or more. In Condition 4, the equivalent ratio (NH/Ep) is preferably 2.00 or less, more preferably 1.80 or less, and still more preferably 1.60 or less. Therefore, in Condition 4, the equivalent ratio (NH/Ep) is preferably more than 1 and 2.00 or less, more preferably 1.05 to 1.80, and still more preferably 1.10 to 1.60.

Here, the equivalent ratio (NH/Ep) is synonymous with the ratio of the number of active hydrogen atoms of amino groups to the number of epoxy groups contained in the thermally conductive resin composition, and can be determined by calculating the equivalent of epoxy groups and the equivalent of active hydrogen atoms of amino groups as follows.

The equivalent of epoxy groups can be obtained by dividing the content (g) of the epoxy resin contained in the thermally conductive resin composition by the epoxy equivalent (g/eq). However, when two or more kinds of epoxy resins are contained, the equivalent can be obtained by summing the values obtained by dividing the content (g) of each epoxy resin by the epoxy equivalent (g/eq).

In addition, the equivalent of active hydrogen atoms of amino groups can be obtained by dividing the content (g) of the amine in the thermally conductive resin composition by the active hydrogen equivalent (g/eq) of the amine.

However, when two or more kinds of amines are contained, the equivalent can be obtained by summing the values obtained by dividing the content (g) of each amine by the active hydrogen equivalent (g/eq). Here, the epoxy equivalent (g/eq) can be obtained by dividing the molecular weight of the epoxy resin by the number of epoxy groups per molecule. In addition, the active hydrogen equivalent (g/eq) can be obtained by dividing the molecular weight of the amine by the number of active hydrogen atoms per molecule. The molecular weight, the number of epoxy groups and the number of active hydrogen atoms can be measured by a mass spectrometer (GC-MS or LC-MS). In addition, when only the molecular weight can be determined by a mass spectrometer, the numbers of epoxy groups and active hydrogen atoms per molecule can be determined by NMR (1H NMR, etc.). However, when the sample is a mixture, it is preferable to isolate each component by gel permeation chromatography (GPC) or high performance liquid chromatography (HPLC) and then perform measurement by NMR.

Here, when the structural formula of an epoxy resin is known, the molecular weight and the number of epoxy groups are the molecular weight and the number of epoxy groups of the epoxy resin that can be calculated from the structural formula. In addition, when the structural formula of an amine is known, the molecular weight and the number of active hydrogen atoms are the molecular weight and the number of active hydrogen atoms in the amine that can be calculated from the structural formula.

Here, the number of active hydrogen atoms in the amine is 1 for NHR₂ (secondary amino group) and 2 for NH₂R (primary amino group) (provided that, in NHR₂ and NH₂R, R is a functional group other than active hydrogen, that is, a moiety of the amine other than NH or NH2).

The total amount (filling rate) of the amine such as the amine curing agent (B) and the epoxy resin such as the polyfunctional epoxy resin (A) with respect to a total volume of the thermally conductive resin composition is preferably 8 vol% or more and 49 vol% or less. When the total amount is equal to or more than the lower limit value, the thermally conductive filler can be appropriately dispersed in the thermally conductive resin composition. In addition, it is possible to prevent the viscosity of the thermally conductive resin composition from becoming higher than necessary. In addition, when the total amount is equal to or less than the upper limit value, it becomes easier to incorporate a certain amount or more of the thermally conductive filler (C) into the thermally conductive resin composition. The total amount of the amine curing agent and the epoxy resin in the thermally conductive resin composition is more preferably 12 vol% or more and 29 vol% or less, still more preferably 14 vol% or more and 24.5 vol% or less, and yet more preferably 15 vol% or more and 23.5 vol% or less.

### [Thermally Conductive Filler (C)]

The thermally conductive resin composition of the present invention contains a thermally conductive filler (C). With the thermally conductive resin composition containing the thermally conductive filler (C), the thermal conductivity of the thermally conductive resin composition is enhanced.

Examples of thermally conductive fillers (C) include metals, metal oxides, metal nitrides, metal hydroxides, carbon materials, non-metal oxides, nitrides, and carbides. In addition, the form of the thermally conductive filler includes spherical shape, a powder having an indefinite shape, or the like.

In the thermally conductive filler (C), examples of metals include aluminum, copper, and nickel, examples of metal oxides include aluminum oxide such as alumina, magnesium oxide, and zinc oxide, and examples of metal nitrides include aluminum nitride. Examples of metal hydroxides include aluminum hydroxide. In addition, examples of carbon materials include spherical graphite. Examples of non-metal oxides and nitride, and carbides include quartz, boron nitride, and silicon carbide. Among these examples, in order to secure insulating properties, metal oxides, metal nitrides, metal hydroxides, carbon materials, non-metal oxides, nitrides, and carbides are preferable, and particularly metal oxides and metal hydroxides are more preferable.

Among the above examples, aluminum oxide is preferable in order to enhance heat dissipation properties of the thermally conductive member, and aluminum hydroxide is preferable when it is desired to enhance flame retardant properties, reduce the specific gravity of the inorganic filler, and reduce the weight of the thermally conductive resin composition.

The above thermally conductive fillers (C) may be used alone or two or more thereof may be used in combination.

The average particle size of the thermally conductive filler (C) is preferably 0.1 µm or more and 200 µm or less, more preferably 0.5 µm or more and 150 µm or less, and still more preferably 1 µm or more and 110 µm or less.

As the thermally conductive filler (C), it is preferable to use a small-particle-size thermally conductive filler (C) having an average particle size of 0.1 µm or more and 5 µm or less and a large-particle-size thermally conductive filler (C) having an average particle size of more than 5 µm and 200 µm or less in combination. The filling rate can be increased when the thermally conductive fillers (C) having different average particle sizes are used.

Here, the average particle size of the thermally conductive filler (C) can be measured by observation under an electron microscope or the like. More specifically, for example, the particle sizes of 50 random thermally conductive fillers (C) are measured using an electron microscope or an optical microscope, and the average value (arithmetic average value) thereof can be taken as the average particle size.

The content (filling rate) of the thermally conductive filler (C) in the thermally conductive resin composition with respect to a total volume of the thermally conductive resin composition is preferably 50 vol% or more. When the content is equal to or more than the lower limit value, a certain level of thermal conductivity can be imparted to the thermally conductive resin composition. In order to further enhance thermal conductivity, the content is more preferably 70 vol% or more, still more preferably 72 vol% or more, and yet more preferably 75 vol% or more.

In addition, the content of the thermally conductive filler (C) in the thermally conductive resin composition with respect to a total volume of the thermally conductive resin composition is preferably 90 vol% or less. When the content of the thermally conductive filler (C) is equal to or less than the upper limit value, the thermally conductive filler (C) can be appropriately dispersed in the thermally conductive resin composition, and the viscosity of the thermally conductive resin composition can be prevented from becoming higher than necessary. In addition, it is easier to enhance adhesion of the thermally conductive resin composition. In this regard, the content of the thermally conductive filler (C) in the thermally conductive resin composition is more preferably 85 vol% or less, still more preferably 80 vol% or less, and yet more preferably 79 vol% or less.

Here, the content of the thermally conductive filler (C) in the thermally conductive resin composition is not particularly limited, and when expressed by parts by mass is preferably 300 parts by mass or more and 3,000 parts by mass or less, more preferably 500 parts by mass or more and 2,000 parts by mass or less, still more preferably 600 parts by mass or more and 1,800 parts by mass or less, and yet more preferably 800 parts by mass or more and 1,500 parts by mass or less with respect to a total amount of 100 parts by mass of the epoxy resin and the amine contained in the thermally conductive resin composition.

In addition, in order to achieve high thermal conductivity while minimizing the specific gravity of the composition and reducing the weight, it is preferable to use aluminum oxide and aluminum hydroxide in combination. In this case, the filling rate of aluminum oxide with respect to a total volume of the thermally conductive resin composition may be, for example, 4 vol% or more and 60 vol% or less, and is preferably 4 vol% or more and 50 vol% or less. When the filling rate of aluminum oxide is equal to or less than the upper limit value, the specific gravity of the thermally conductive resin composition is reduced and the weight is easily reduced. On the other hand, when the filling rate of aluminum oxide is equal to or more than the lower limit value, it is easier to secure a certain level of thermal conductivity. In this regard, the filling rate of aluminum oxide is more preferably 6 vol% or more and 40 vol% or less, and still more preferably 10 vol% or more and 30 vol% or less.

The filling rate of aluminum hydroxide with respect to a total volume of the thermally conductive resin composition may be, for example, 10 vol% or more and 86 vol% or less, and is preferably 25 vol% or more and 86 vol% or less. When the amount of aluminum hydroxide is equal to or less than the lower limit value, the thermal conductivity is enhanced, the specific gravity of the thermally conductive resin composition is reduced and the weight is easily reduced. On the other hand, when the amount of aluminum hydroxide is equal to or less than the upper limit value, it becomes easier to contain a certain amount or more of aluminum oxide, and it is easier to secure a certain level of thermal conductivity. In this regard, the filling rate of aluminum hydroxide is more preferably 35 vol% or more and 75 vol% or less, and still more preferably 45 vol% or more and 65 vol% or less.

Here, the ratio of the filling rate of aluminum hydroxide to the filling rate of aluminum oxide may be, for example, 0.25 or more and 15 or less, but it is preferably higher than the filling rate of aluminum oxide, and the ratio of the filling rate of aluminum hydroxide to the filling rate of aluminum oxide is preferably more than 1 and 15 or less, still more preferably 1.05 or more and 10 or less, and yet more preferably 1.5 or more and 5 or less.

### (Dispersant)

The thermally conductive resin composition of the present invention may contain a dispersant. Examples of dispersants include a polymer-based dispersant. Examples of polymer-based dispersants include a polymer compound having a functional group. Examples of the polymer compounds include acrylic-based, vinyl-based, polyester-based, polyurethane-based, polyether-based, epoxy-based, polystyrene-based, amino-based, and silicone-based compounds. In addition, examples of functional groups include a carboxyl group, a phosphoric acid group, a sulfonic acid group, a carboxylic acid ester group, a phosphoric acid ester group, a sulfonic acid ester group, a hydroxyl group, an amino group, a quaternary ammonium salt group, and an amide group. In addition, a dispersant that is not a polymer dispersant may also be used and, for example, an alkoxysilane compound may also be used.

The content of the dispersant in the thermally conductive resin composition with respect to a total amount of 100 parts by mass of the epoxy resin and the amine is preferably 0.1 parts by mass or more and 20 parts by mass or less, more preferably 0.2 parts by mass or more and 10 parts by mass or less, and still more preferably 0.4 parts by mass or more and 5 parts by mass or less.

### (Diluent)

The thermally conductive resin composition of the present invention may contain a diluent. The diluent may be any one that is a liquid at room temperature. The diluent is a non-reactive compound that does not have a functional group that can react with an epoxy resin and an amine such as an amine curing agent. When the diluent is used, it is possible to reduce the viscosity of the thermally conductive resin composition.

Examples of diluents include fatty acid esters, for example, esters of fatty acids and monohydric aliphatic alcohols such as hexadecyl 2-ethylhexanoate, methyl laurate, isopropyl myristate, isopropyl palmitate, 2-ethylhexyl palmitate, octyldodecyl myristate, methyl stearate, butyl stearate, 2-ethylhexyl stearate, isotridecyl stearate, methyl caprate, methyl myristate, methyl oleate, isobutyl oleate, octyl oleate, lauryl oleate, myristyl myristate, 2-ethylhexyl oleate, decyl oleate, and isobutyl oleate, and among these, hexadecyl 2-ethylhexanoate is preferable.

The content of the diluent is not particularly limited, and is preferably 0.1 parts by mass or more and 10 parts by mass or less, more preferably 0.2 parts by mass or more and 5 parts by mass or less, and still more preferably 0.3 parts by mass or more and 3 parts by mass or less with respect to a total amount of 100 parts by mass of the epoxy resin and the amine.

### (Other Additives)

The thermally conductive resin composition of the present invention may contain additives other than those described above, and examples of such additives include a curing catalyst that promotes the reaction between the base resin and the curing agent, a reaction rate control agent that inhibits the reaction between the base resin and the curing agent, a thixotropy-imparting agent, a flame retardant, an antioxidant, and a colorant.

### <Viscosity>

The viscosity of the thermally conductive resin composition of the present invention measured at 25°C is preferably 500 Pa·s or less. When the viscosity of the thermally conductive resin composition is 500 Pa·s or less, the thermally conductive resin composition can be easily applied to the adherend, and for example, the time required for the application process using a dispenser can be shortened. In addition, the time required for the process of assembling a battery module or a battery cell onto the applied thermally conductive resin composition can also be shortened, and the workability is enhanced. In addition, narrow gaps can be easily filled with the thermally conductive resin composition. The viscosity is more preferably 300 Pa·s or less, and still more preferably 250 Pa·s or less. In addition, the viscosity may be, for example, 10 Pa·s or more, and in order to fill a certain amount or more of the thermally conductive filler (C) and prevent dripping and so on, the viscosity is preferably 20 Pa·s or more, and more preferably 40 Pa·s or more.

Here, the viscosity of the thermally conductive resin composition is the viscosity before curing, and for example, in the case of a two-component type, the viscosity can be determined by performing measurement immediately after a first agent and a second agent are mixed. The viscosity may be measured according to the method described in examples.

### <Curing Rate>

The thermally conductive resin composition of the present invention preferably has an appropriate curing rate, and specifically, it is desirable that the adhesive force be low for a certain period from the start of curing so that curing does not proceed too much, but that the adhesive force be high after a long period of time has elapsed so that curing proceeds sufficiently. More specifically, when PET films are attached with a thermally conductive resin composition therebetween, the time required for the adhesive force to reach 0.1 MPa or more from the start of attachment is preferably 24 hours or longer, more preferably 48 hours or longer, and still more preferably 72 hours or longer. As described above, when the adhesive force can be maintained low immediately after start of attachment, rework becomes easier, and even when the residue of the thermally conductive resin composition remains on the adherend during rework, it can be easily removed from the adherend by washing or the like. Therefore, for example, rework becomes easier from when the battery assembly is assembled until it is shipped. Therefore, for example, even when reassembly is determined to be necessary in pre-shipment inspection, the adherend can be easily reused.

In addition, the time required for the adhesive force to reach 0.1 MPa or more is preferably 132 hours or shorter. When the time is 132 hours or shorter, complete curing can be performed in an appropriate time, the adhesive force of the thermally conductive resin composition becomes sufficiently high, and the adherends can be appropriately adhered to each other. Therefore, after the product is shipped, the adherends are appropriately adhered to each other, and thus problems such as peeling off after shipment are prevented.

Here, the time required for the adhesive force to reach 0.1 MPa or more can be measured by the following method. First, two glass fiber-reinforced PET films with a size of 25 mm×100 mm and a thickness of 2.0 mm are prepared as substrates, and the ends of the two films are attached together with a thermally conductive resin composition applied so that the size is 25 mm×15 mm and the thickness is 2 mm after curing to obtain a measurement sample. In this case, for example, in the case of a two-component type, the PET films may be immediately attached together with the thermally conductive resin composition obtained by mixing the first agent and the second agent to obtain a sample. In addition, a plurality of measurement samples are prepared. Thus, each measurement sample is left in an environment of 23°C, the shear adhesive force of the measurement sample is measured every 12 hours, and the time until the shear adhesive force reaches 0.1 MPa or more is recorded. Here, the adhesive force of the thermally conductive resin composition can be determined by measuring the shear adhesive force according to DIN EN 1465.

### <Adhesive Force When Fully Cured>

The adhesive force of the thermally conductive resin composition to the PET when fully cured (completely cured) may be, for example, 0.3 MPa or more, and is preferably 0.5 MPa or more, more preferably 1.0 MPa or more, and still more preferably 1.2 MPa or more. In consideration of reworkability, the adhesive force of the thermally conductive resin composition to the PET is preferably a certain level or less, and preferably 3.5 MPa or less, more preferably 3.0 MPa or less, and still more preferably 2.5 MPa or less. Here, the adhesive force when fully cured may be measured by the method described in examples to be described below.

### (Supply Form)

The form of the thermally conductive resin composition of the present invention may be a one-component type or a two-component type in which a first agent and a second agent are combined, and a two-component type is preferable in consideration of storage stability.

In the case of a two-component type, the thermally conductive resin composition may be cured by mixing and then leaving it at room temperature (25°C), or it may be cured by heating after mixing. On the other hand, in the case of a one-component type, the thermally conductive resin composition may be cured by heating. Here, when curing is performed by heating, the thermally conductive resin composition may be heated to, for example, about 50 to 300°C.

In the two-component typed thermally conductive resin composition, the mass ratio of the second agent to the first agent (second agent/first agent) may be, for example, 0.25 or more and 4 or less, but is preferably 1 or a value close to 1, and specifically, preferably 0.8 or more and 1.2 or less, more preferably 0.9 or more and 1.1 or less, and still more preferably 0.95 or more and 1.05 or less. In this manner, when the mass ratio of the second agent to the first agent is set to 1 or a value close to 1, it is easier to prepare the thermally conductive resin composition.

In addition, in the two-component typed thermally conductive resin composition, the first agent and the second agent are both a liquids at room temperature (25°C), and the viscosities of the first agent and the second agent are the same, or when the viscosities are different, it is preferable that the viscosity difference be small. In this manner, when the viscosities of the first agent and the second agent are the same as or close to each other, it becomes easier to uniformly mix the first agent and the second agent.

Specifically, the viscosity difference between the viscosity (Pa·s) of the first agent and the viscosity (Pa·s) of the second agent is preferably 250 Pa·s or less, more preferably 150 Pa·s or less, and still more preferably 100 Pa·s or less. In addition, the viscosity difference may be 0 Pa·s or more.

The viscosity of each of the first agent and the second agent is not particularly limited, and is preferably 4 Pa·s or more and 500 Pa·s or less, more preferably 20 Pa·s or more and 300 Pa·s or less, and still more preferably 40 Pa·s or more and 250 Pa·s or less.

In addition, the viscosities of the first agent and the second agent here can be measured using a rheometer (for example, rheometer "MCR-302e", commercially available from Anton Paar) when the temperature of a sample is adjusted to 25°C with a Peltier plate and a φ25 mm parallel plate is used while continuously changing the shear rate in a shear rate range of 0.0001 to 100 (1/sec) after the sample is placed thereon and then left to stand for 10 minutes. In addition, the value of the viscosity is a value at a shear rate of 3.16 (1/s).

In the two-component typed thermally conductive resin composition, the first agent may contain an epoxy resin such as the polyfunctional epoxy resin (A), and the second agent may contain an amine such as the amine curing agent (B). In addition, it is preferable that, in the two-component typed thermally conductive resin composition, the first agent contain an epoxy resin but not contain an amine such as the amine curing agent (B). However, the first agent may contain an amine as long as it does not react with the epoxy resin contained therein. On the other hand, it is preferable that the second agent contain an amine such as the amine curing agent (B), but not contain an epoxy resin such as the polyfunctional epoxy resin (A). However, the second agent may contain an epoxy resin as long as it does not react with the amine contained therein.

The thermally conductive filler (C) is contained in at least one of the first agent or the second agent, but is preferably contained in both the first agent and the second agent. Therefore, it is preferable that the first agent contain the polyfunctional epoxy resin (A) and the thermally conductive filler (C), and the second agent contain the amine curing agent (B) and the thermally conductive filler (C). Thus, it is more preferable that the first agent not contain an amine such as the amine curing agent (B) and the second agent not contain an epoxy resin such as the polyfunctional epoxy resin (A). Therefore, it is more preferable that the entire polyfunctional epoxy resin (A) of the thermally conductive resin composition be contained in the first agent and the entire amine curing agent (B) of the thermally conductive resin composition be contained in the second agent.

As described above, it is preferable that the thermally conductive filler (C) be contained in both the first agent and the second agent, and it is more preferable that filling rates of the thermally conductive filler (C) in the first agent and the second agent be approximately the same. Specifically, the ratio of the filling rate of the thermally conductive filler (C) in the second agent to the filling rate of the thermally conductive filler (C) in the first agent is preferably 0.67 or more and 1.5 or less, more preferably 0.83 or more and 1.2 or less, and still more preferably 0.91 or more and 1.1 or less. When the filling rates of the thermally conductive filler (C) in the first agent and the second agent are approximately the same, it becomes easier to reduce the difference in viscosity between the first agent and the second agent, and it also becomes easier to bring the mass ratio of the second agent to the first agent closer to 1. Here, the filling rate of the thermally conductive filler (C) in the first agent means the volume proportion (vol%) of the filler with respect to a total amount of the first agent. The same applies to the filling rate of the thermally conductive filler (C) in the second agent.

In a two-component type, a dispersant, a diluent and other additives may be contained in one or both of the first agent and the second agent as necessary. For example, when the thermally conductive filler (C) is contained in both the first agent and the second agent, the dispersant may be contained in both the first agent and the second agent.

When the thermally conductive resin composition is of a two-component type, separate containers are preferably filled with the first agent and the second agent, and specifically, a first container may be filled with the first agent, and a second container may be filled with the second agent. The first container and the second container may be separate bodies, or may be integrated into a single body. When the first container and the second container are integrated, they are easily supplied as a container set to a demand destination. Here, in this specification, the first container filled with the first agent and the second container filled with the second agent may be collectively referred to as a container set.

Examples of containers include, but are not limited to, a syringe and a cartridge. For example, when a syringe is filled, it is preferable to use a dual barrel syringe. As shown in Fig. 1, a dual barrel syringe 30 has a first syringe 31 constituting a first container and a second syringe 32 constituting a second container which are parallelly integrated into a single body. Using the syringes as dispensers, a first agent 35 and a second agent 36 with which the syringes 31 and 32 are filled respectively may be discharged from the syringes and mixed.

In addition, when a cartridge is used, a container set is composed of a first cartridge constituting a first container and a second cartridge constituting a second container, and these cartridges may be integrated into one body. Here, the cartridges are generally set in syringes (for example, a first syringe and a second syringe) or the like, and the first agent delivered from the first cartridge and the second agent delivered from the second cartridge may be discharged from respective outlets of the first syringe and the second syringe using the syringes as dispensers and mixed.

The first agent and the second agent may be mixed in a mixer such as a static mixer. For example, a static mixer 38 may be connected to an outlet 31A of the first syringe 31 and an outlet 32A of the second syringe 32, and the first agent 35 and the second agent 36 discharged from the outlets 31A and 32A can be mixed inside the mixer 38. A mixture (thermally conductive resin composition) obtained by mixing in the mixer 38 may be discharged from an outlet 39 of the mixer 38.

Each of the syringes 31 and 32 may have a structure in which the openings of barrels 33A and 34A which are filled with the first agent 35 and the second agent 36, respectively, are closed with lids 33B and 34B. In the syringe 30 shown in Fig. 1, the first agent 35 and the second agent 36 may be discharged from the outlets 31A and 32A by removing the lids 33B and 34B and pushing them out with a piston (not shown) inserted from the opening.

In addition, when a pail can is used, as shown in Fig. 2, the container set may include a first pail can 41 which constitutes a first container and which is filled with a first agent 45, and a second pail can 42 which constitutes a second container and which is filled with a second agent 46. Here, the pail cans 41 and 42 include, for example, container main bodies 43A and 44A which are filled with the first agent 45 and the second agent 46 and which have openings, and lids 43B and 44B which close the openings of the container main bodies 43A and 44B, respectively.

### (Method of Preparing Thermally Conductive Resin Composition)

When the thermally conductive resin composition of the present invention is of a two-component type, the first agent and the second agent may be obtained by mixing respective components constituting the first agent and the second agent. Similarly, in the case of a one-component type, it may be obtained by mixing respective components constituting the thermally conductive resin composition. The method of mixing respective components is not particularly limited, and for example, the composition may be prepared by adding the thermally conductive filler (C), and additionally, additives such as a dispersant, which are added as necessary, to an epoxy resin, an amine curing agent, or both, and then stirring or kneading the mixture.

In addition, the thermally conductive filler (C) may be surface-treated with a dispersant and then mixed with an epoxy resin, an amine curing agent, or both. When the thermally conductive filler (C) is surface-treated in advance with a dispersant, the surface is previously modified with the dispersant. Thus, the thermally conductive filler (C) that has been surface-modified in advance may be mixed with an epoxy resin, an amine curing agent, or both to prepare a thermally conductive resin composition or a first agent or a second agent of the thermally conductive resin composition.

The method of performing a surface treatment in advance using a dispersant is not particularly limited, and known methods may be used, for example, a wet treatment method, a dry treatment method and the like can be used. In the wet treatment method, for example, the thermally conductive filler (C) is added and mixed in a treatment solution in which a dispersant is dispersed or dissolved in a solvent, the mixture is then dried, heated, washed, or the like, and thus the dispersant may be bonded or adhered to the surface of the thermally conductive filler (C). In addition, the dry treatment method is a surface treatment method without using a dispersion medium, specifically, a method in which a dispersant is mixed with the thermally conductive filler (C), and the mixture is stirred in a mixer or the like and then heated to bond or adhere the dispersant to the surface of the thermally conductive filler (C).

### [Thermally Conductive Member]

The thermally conductive resin composition of the present invention may be used as a thermally conductive member. The thermally conductive resin composition of the present invention becomes a thermally conductive member by curing. The thermally conductive member of the present invention is a cured product of the thermally conductive resin composition, and includes a polymer matrix and the thermally conductive filler (C). The polymer matrix is formed of a cured epoxy resin product obtained by curing an epoxy resin and an amine curing agent, and the thermally conductive filler (C) is dispersed in the polymer matrix and retained in the polymer matrix. The thermally conductive member may be used by being disposed between two members such as a heating element and a heat dissipating element. Examples of heating elements include an electronic component that generates heat such as a battery. Examples of heat dissipating elements include a housing and a cooling member such as a heat sink and a cooling plate.

### [Applications]

The thermally conductive resin composition and the thermally conductive member of the present invention can be used for various applications, and for example, can be used for various electronic device applications, for example, battery assemblies such as lithiumion battery (LiB) assemblies, power electronics, electronic packaging, LEDs, solar cells, and electrical grids. Among these examples, the thermally conductive resin composition and the thermally conductive member are preferably used in battery assemblies, and more preferably in LiB assemblies. Therefore, in one preferable embodiment of the present invention, a battery assembly including the thermally conductive member is provided. Here, battery assemblies such as LiB assemblies can be preferably used for vehicles such as electric vehicles.

In battery assembly applications, the thermally conductive resin composition and the thermally conductive member of the present invention are preferably used as a gap filler for a battery assembly. In addition, in one aspect, the thermally conductive resin composition and the thermally conductive member of the present invention are preferably used in a battery module, and more preferably used in a gap filler for a battery module. Hereinafter, an example in which the thermally conductive member of the present invention is applied to a battery module will be described.

The battery module includes a gap filler formed of a thermally conductive member, a plurality of battery cells, and a module housing that stores the plurality of battery cells, and the gap filler is disposed inside the module housing. The gap filler formed of a thermally conductive member is provided between the battery cells and between the battery cell and the module housing, and the gap filler provided is in close contact with the battery cell and the module housing. Thereby, the gap filler between the battery cells has a function of maintaining the separated state between the battery cells. In addition, the gap filler between the battery cell and the module housing is in close contact with both the battery cell and the module housing, and has a function of transferring heat generated in the battery cell to the module housing.

Fig. 3 shows a specific configuration of the battery module. Fig. 4 shows a specific configuration of each battery cell. As shown in Fig. 3, a plurality of battery cells 11 are disposed inside a battery module 10. Each battery cell 11 is laminated with a flexible exterior film and enclosed therein, and its overall shape is a flat shape whose thickness is small compared to its height and width size. As shown in Fig. 4, in such a battery cell 11, a positive electrode 11a and a negative electrode 11b are exposed to the outside, and a center part 11c of the flat surface may be formed thicker than a crimped end 11d. In addition, the surface of each battery cell 11 is preferably covered with a resin material. When the surface of each battery cell 10 is covered with a resin material, it is easier to secure insulating properties. The resin material is not particularly limited, and examples thereof include polyester resins such as polyethylene terephthalate (PET), polyimide resins, olefin resins such as polypropylene resins, and polycarbonate resins, and among these, PET is more preferable.

As shown in Fig. 3, the battery cells 11 are disposed so that their flat surfaces face each other. In the configuration of Fig. 3, a gap filler 13 is provided not to cover the entirety of the plurality of battery cells 11 stored inside a module housing 12. The gap filler 13 is provided so as to fill gaps present in a part (bottom part) inside the module housing 12. The gap filler 13 is provided between the battery cells 11 and between the battery cell 11 and the module housing 12, and is in close contact with the surface of the battery cell 11 and the inner surface of the module housing 12 in this portion.

The gap filler 13 provided between the battery cells 11 adheres to the surfaces of both of the battery cells 11, but since the gap filler 13 itself has appropriate elasticity and flexibility, even when an external force that displaces the gap between the battery cells 11 is applied, it is possible to reduce strain deformation caused by the external force. Therefore, the gap filler 13 has a function of maintaining the separated state between the battery cells 11.

The gap filler 13 provided in the gap between the battery cell 11 and the inner surface of the module housing 12 is also tightly adhered to the surface of the battery cell 11 and the inner surface of the module housing 12. As a result, heat generated inside the battery cell 11 is transferred via the gap filler 13 adhered to the surface of the battery cell 11 to the inner surface of the module housing 12 which is in close contact with the other surface of the gap filler 13.

The gap filler 13 may be formed in the battery module 10 by applying a liquid thermally conductive resin composition using a general dispenser and then curing the liquid thermally conductive resin composition. In addition, as described above, with the thermally conductive resin composition of the present invention having a low viscosity, the workability when the gap filler 13 is formed is enhanced.

As described above, when the gap filler 13 is formed, it is preferable to use a two-component typed thermally conductive resin composition. The two-component type is easy to store, and it is unlikely to be cured during an application operation using a dispenser with mixing immediately before use but it can be cured quickly after application. In addition, application using a dispenser is also preferable because the liquid thermally conductive resin composition can reach relatively deep inside the housing 12 of the battery module 10.

The gap filler 13 covering the battery cell 11 preferably covers 20 to 40% of each battery cell 11 on one side of the battery cell 11. By covering 20% or more, the battery cell 11 can be stably retained. In addition, when the battery cell that generates a large amount of heat is sufficiently covered, heat dissipation efficiency is enhanced. On the other hand, by covering 40% or less, heat generated from the battery cell 11 can be efficiently dissipated, and weight increase, workability deterioration and the like are prevented. In addition, in order to enhance heat dissipation efficiency, it is preferable to cover the side of the battery cell 11 on which the electrodes 11a and 11b are provided with the gap filler 13, and it is more preferable to cover the entire electrodes 11a and 11b with the gap filler 13. As described above, the battery module 10 can dissipate heat generated from the battery cell 11 to the module housing 12 via the gap filler 13.

The gap filler 13 is also preferably used in a battery pack including a plurality of battery modules 10 therein. The battery pack generally includes a plurality of battery modules 10, and a battery pack housing in which the plurality of battery modules 10 are accommodated. In the battery pack, the gap filler 13 may be provided between the battery module 10 and the battery pack housing. Thereby, heat dissipated to the module housing 12 as described above can additionally dissipate to the battery pack housing, and heat can be effectively dissipated.

In addition, in the above description, the battery assembly has been exemplified as a battery module or a battery pack including a battery module, but the battery assembly may be applied as a battery assembly having no battery module, and for example, the battery assembly is also preferably applied as a battery assembly having a cell-to-pack structure.

Fig. 5 shows a schematic view of a battery assembly having a cell-to-pack structure. A battery assembly 20 having a cell-to-pack structure includes a plurality of battery cells 21 and a battery pack housing, and the plurality of battery cells 21 are adhered to a base member 25 constituting a battery pack housing via a gap filler 23 formed of a thermally conductive member (cured product of the thermally conductive resin composition). The base member 25 may constitute a cooling plate or the like. The base member 25 constituted by a cooling plate or the like may have an uneven surface, and the battery cell 21 may be adhered to the uneven surface of the base member 25 via the gap filler 23.

The thermally conductive resin composition of the present invention has favorable thermal conductivity and can also have a high adhesive force. Therefore, the gap filler 23 formed of the cured product of the thermally conductive resin composition can fix the battery cell 21 to the base member 25 with a high adhesive force, and effectively dissipate heat generated in the battery cell 21 to the base member 25.

The formation of the gap filler 23 in the battery assembly 20 may be performed in the same manner as the formation of the gap filler 13 in the battery module, for example, using a general dispenser. With making the thermally conductive resin composition of the present invention having a low viscosity, the workability when the gap filler 23 is formed is also enhanced.

The thermally conductive resin composition of the present invention has appropriate curability and has an adhesive force that is not very high in the initial stage of curing. Therefore, even when the battery cell 21 is, for example, erroneously attached to the base member 25, since the battery cell 21 can be easily peeled off and reworked, the battery cell 21 and the base member 25 can be reused without being damaged in rework. In addition, the workability in rework is enhanced. In addition, since the thermally conductive resin composition has a sufficiently high adhesive force after a certain period of time has elapsed, not only the reworkability but also the adhesion between the battery cell 21 and the base member 25 can be enhanced.

Of course, the thermally conductive resin composition of the present invention can provide favorable reworkability and adhesion not only in the case of a cell-to-pack structure, but also in other battery assemblies such as the battery module shown in Fig. 3 and members other than battery assemblies.

Here, in the above description, an example in which the surfaces of the battery cells 11 and 21 are covered with a resin material has been described, but constituting member(s) other than the battery cells, such as a base member such as a cooling plate, a battery module, a module housing, and a battery pack housing may be covered with a resin material or made of a resin material. Even in this case, the constituting members can be appropriately adhered using the thermally conductive resin composition of the present invention as the gap filler disposed between the constituting members.

### Examples

Hereinafter, the present invention will be described in more detail with reference to examples, but the present invention is not limited to these examples.

### [Curing Rate at 23°C]

### <Time Until Shear Adhesive Force Reaches 0.1 MPa or More>

First, two glass fiber-reinforced PET films with a width of 25 mm, a length of 100 mm and a thickness of 2 mm ("Rynite FR530 PET", commercially available from Nippon Testpanel Co., Ltd.) were prepared. Then, a thermally conductive resin composition was applied to the longitudinal end of one of the films across the entire width of the film by a length of 15 mm so that the thickness after curing was 2 mm. Then, the longitudinal end of the other film was placed above the applied thermally conductive resin composition, and the PET films were attached together to obtain a measurement sample. A plurality of measurement samples were prepared.

Each measurement sample was left in an environment of 23°C and 50% RH, the shear adhesive force of the measurement sample was measured every 12 hours after attachment, and the time until the shear adhesive force reached 0.1 MPa or more was recorded, and evaluated according to the following evaluation criteria.

The adhesive force of the thermally conductive resin composition was measured according to DIN EN 1465, and each measurement sample was subjected to a tensile test in which the measurement sample was pulled in the longitudinal direction at a tensile speed of 10 mm/sec in an environment of 25°C and 50% RH until it broke, and the breaking strength was defined as the "adhesive force" (shear adhesive force).

### (Evaluation Criteria)

A: The time from attachment until the shear adhesive force reached 0.1 MPa or more was 72 hours or longer and 132 hours or shorter, the reworkability was excellent over a long period of time from the start, while a high adhesive force could be obtained with the cure proceeding in an appropriate time and the adhesion was also excellent.
B: The time from attachment until the shear adhesive force reached 0.1 MPa or more was 48 hours or longer and 60 hours or shorter, the reworkability was excellent for a relatively long period of time from the start, while a high adhesive force could be obtained with the cure proceeding in an appropriate time and the adhesion was also excellent.
C: The time from attachment until the shear adhesive force reached 0.1 MPa or more was 24 hours or longer and 36 hours or shorter, the reworkability was excellent for a certain period of time from the start, while a high adhesive force could be obtained with the cure proceeding in an appropriate time and the adhesion was also excellent.
D: The time from attachment until the shear adhesive force reached 0.1 MPa or more was 12 hours or shorter or longer than 132 hours, and thus either the reworkability or the adhesion was not good.

### <Full Cure Time and Shear Adhesive Force When Fully Cured>

Even after the shear adhesive force reached 0.1 MPa or more, each measurement sample was continuously left in an environment of 23°C and 50% RH, the shear adhesive force of the measurement sample was measured every 24 hours, and the first time of the times at which the same value was obtained twice consecutively was defined as the full cure time. The method of measuring the shear adhesive force was the same as above. Here, Table 1 shows the full cure time and the shear adhesive force at the full cure time.

### [Viscosity]

A sample consisting of the first agent or the second agent was measured using a rheometer (for example, rheometer "MCR-302e", commercially available from Anton Paar) by adjusting the temperature of the sample to 25°C with a Peltier plate, using a φ25 mm parallel plate, placing the sample thereon, and then immediately continuously changing the shear rate in a shear rate range of 0.0001 to 100 (1/s). The value of the viscosity was a measurement value of the viscosity at a shear rate of 3.16 (1/s). Here, the viscosity of the first agent and the second agent was measured after the sample was placed and then left to stand for 10 minutes.

### [Examples 1 to 6 and Comparative Examples 1 to 3]

According to the formulations in Tables 1 and 2, respective components were mixed to prepare first agents and second agents. The prepared first and second agents were mixed at the mass ratio (A:B) shown in Tables 1 and 2 at room temperature to obtain thermally conductive resin compositions. The obtained thermally conductive resin compositions were subjected to evaluation tests.

The components used in the examples and comparative examples are as follows.

### (Epoxy Resin)

Polyfunctional aromatic epoxy resin 1: bisphenol F type epoxy resin (product name "jER806", a liquid at 23°C, commercially available from Mitsubishi Chemical Corporation), a molecular weight of 330, an epoxy equivalent of 165 g/eq, and a number of functional groups of 2

Polyfunctional aliphatic epoxy 1: polyethylene glycol diglycidyl ether (product name "Denacol EX-851", commercially available from Nagase ChemteX Corporation), a molecular weight of 300, an epoxy equivalent of 150 g/eq, and a number of functional groups of 2

Polyfunctional aliphatic epoxy 2: trimethylolpropane polyglycidyl ether (product name "EX-321"), a molecular weight of 325, an epoxy equivalent of 130 g/eq, a number of functional groups of 2 to 3, and a proportion of trifunctional component=50 mass%

Polyfunctional aliphatic epoxy 3: polyethylene glycol diglycidyl ether (product name "Denacol EX-830", commercially available from Nagase ChemteX Corporation), a molecular weight of 536, an epoxy equivalent of 268 g/eq, and a number of functional groups of 2

Polyfunctional aliphatic epoxy 4: polytetramethylene glycol diglycidyl ether (product name "Denacol EX-991L", commercially available from Nagase ChemteX Corporation), a molecular weight of 900, an epoxy equivalent of 450 g/eq, and a number of functional groups of 2

Monofunctional epoxy resin: aliphatic glycidyl ether (aliphatic alcohol is C12-14) (product name "Epogosey ML", commercially available from Yokkaichi Chemical Company Limited), a molecular weight of 282, an epoxy equivalent of 282 g/eq, and a number of functional groups of 1

Amine curing agent 1: an aliphatic primary amine having the following structure (product name "DYTEK A amine", commercially available from Invista), an active hydrogen equivalent of 29 g/eq

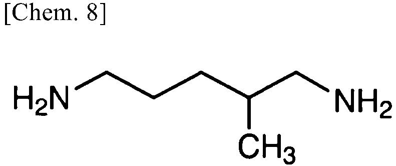

Amine curing agent 2: a trimethylolpropane poly(oxypropylene)triamine having the following structural formula (product name "T-403", commercially available from HUNTSMAN), a molecular weight of 440, and an active hydrogen equivalent of 73.3 g/eq 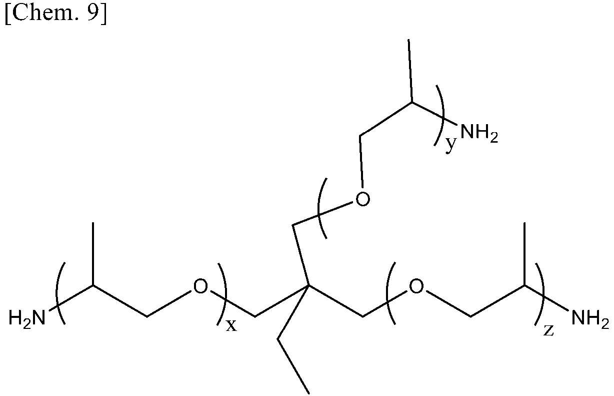 (in the formula, x+y+z=5 to 6)

Amine curing agent 3: a polyoxypropylenediamine having the following structure (product name "D-400", commercially available from HUNTSMAN), a molecular weight of 430, and an active hydrogen equivalent of 107.5 g/eq 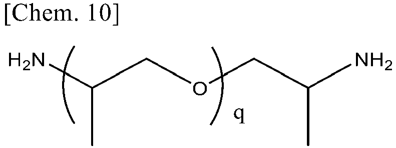 (in the formula, q=up to 6.1)

Amine curing agent 4: a polyalkylene glycol diamine having the following structure (product name "RT-1000", commercially available from HUNTSMAN), a molecular weight of 1,000, and an active hydrogen equivalent of 250 g/eq 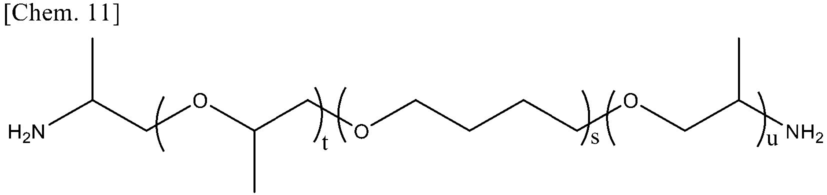 (in the formula, s, t, and u are values at which the molecular weight is 1,000)

Amine curing agent 5: an alicyclic secondary amine having the following structure (product name "Clearlink 1000", commercially available from Dorf Ketal Chemicals (I) Pvt. Ltd.), an active hydrogen equivalent of 161.24 g/eq

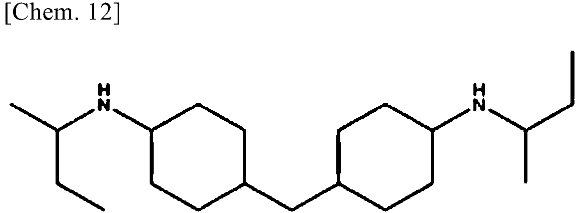

### (Dispersant)

Polymer-based dispersant (acidic group-containing copolymer)

### (Non-reactive Diluent)

Cetyl 2-ethylhexanoate (product name "NIKKOL CIO", commercially available from Nikko Chemicals Co., Ltd., a molecular weight of 369)

### (Thermally Conductive Filler (C))

Aluminum hydroxide 1: an average particle size of 1 µm
Aluminum hydroxide 2: an average particle size of 10 µm
Aluminum hydroxide 3: an average particle size of 90 µm
Alumina 1: an average particle size of 5 µm
Alumina 2: an average particle size of 75 µm
Alumina 3: an average particle size of 45 µm

**[Table 1]**

| | | MW | Specific gravity /unit | Example 1 | | Example 2 | | Example 3 | | Example 4 | | Example 5 | |
|---|---|---|---|---|---|---|---|---|---|---|---|---|---|
| | | | | A | B | A | B | A | B | A | B | A | B |
| Formulation (parts by mass) | Polyfunctional aromatic epoxy | 330 | 1.20 | 6.4 | | 6.7 | | | | | | | |
| | Polyfunctional aliphatic epoxy 1 | 300 | 1.17 | | | | | 7.7 | | | | | |
| | Polyfunctional aliphatic epoxy 2 | 325 | 1.17 | | | | | | | | | 5.0 | |
| | Polyfunctional aliphatic epoxy 3 | 536 | 1.16 | | | | | | | 7.7 | | | |
| | Polyfunctional aliphatic epoxy 4 | 900 | 1.16 | | | | | | | | | | |
| | Monofunctional epoxy resin | 282 | 0.89 | 3.2 | | 2.9 | | 1.9 | | 1.9 | | 2.0 | |
| | Amine curing agent 1 | | 0.87 | | | | | | | | | | |
| | Amine curing agent 2 | | 0.97 | | 8.7 | | | | 8.7 | | 8.7 | | |
| | Amine curing agent 3 | | 0.97 | | | | 8.7 | | | | | | 8.7 |
| | Amine curing agent 4 | | 0.97 | | | | | | | | | | |
| | Amine curing agent 5 | | 0.90 | | | | | | | | | | |
| | Dispersant | | 1.00 | 0.3 | 0.2 | 0.3 | 0.2 | 0.3 | 0.2 | 0.3 | 0.2 | 0.1 | 0.1 |
| | Non-reactive diluent | | 1.00 | | | | | | | | | 2.6 | |
| | Aluminum hydroxide1 | | 2.42 | 12.9 | 13.0 | 12.9 | 13.0 | 12.9 | 13.0 | 12.9 | 13.0 | 12.9 | 13.1 |
| | Aluminum hydroxide2 | | 2.42 | 16.7 | 16.8 | 16.7 | 16.8 | 16.7 | 16.8 | 16.7 | 16.8 | 16.8 | 16.9 |
| | Aluminum hydroxide3 | | 2.42 | 31.3 | 31.6 | 31.3 | 31.6 | 31.3 | 31.6 | 31.3 | 31.6 | 31.4 | 31.7 |
| | Alumina1 | | 3.96 | | | | | | | | | | |
| | Alumina2 | | 3.96 | | | | | | | | | | |
| | Alumina3 | | 3.96 | 29.1 | 29.3 | 29.1 | 29.3 | 29.1 | 29.3 | 29.1 | 29.3 | 29.2 | 29.5 |
| | Sum | | - | 100 | 100 | 100 | 100 | 100 | 100 | 100 | 100 | 100 | 100 |
| A:B(mass ratio) | | | - | 100 | 84 | 100 | 125 | 100 | 98 | 100 | 60 | 100 | 100 |
| Equivalent ratio (NH/Ep) | | | - | 1.99 | | 1.99 | | 2.00 | | 2.01 | | 1.78 | |
| Filling rate in each agent | Total filler | | vol% | 77.9% | 78.0% | 78.1% | 78.0% | 78.3% | 78.0% | 78.2% | 78.0% | 78.0% | 78.4% |
| | Alumina | | vol% | 17.6% | 17.6% | 17.6% | 17.6% | 17.7% | 17.6% | 17.7% | 17.6% | 17.6% | 17.7% |
| | Aluminum hydroxide | | vol% | 60.3% | 60.4% | 60.4% | 60.4% | 60.6% | 60.4% | 60.5% | 60.4% | 60.4% | 60.7% |
| | Epoxy+amine | | vol% | 21.5% | 21.4% | 21.3% | 21.4% | 21.1% | 21.4% | 21.2% | 21.4% | 15.6% | 21.4% |
| Filling rate in thermally conductive resin composition | Total filler | | vol% | 78.0% | | 78.0% | | 78.2% | | 78.1% | | 78.2% | |
| | Alumina | | vol% | 17.6% | | 17.6% | | 17.6% | | 17.6% | | 17.7% | |
| | Aluminum hydroxide | | vol% | 60.4% | | 60.4% | | 60.5% | | 60.5% | | 60.5% | |
| | Epoxy+amine | | vol% | 21.5% | | 21.4% | | 21.3% | | 21.3% | | 18.5% | |
| Specific gravity | Each agent | | - | 2.39 2.37 | | 2.40 2.37 | | 2.41 2.37 | | 2.40 2.37 | | 2.39 2.38 | |
| | Thermally conductive resin composition | | - | 2.38 | | 2.38 | | 2.39 | | 2.39 | | 2.38 | |
| Curing rate at 23°C | Time until reached 0.1 MPa | | Hour | 36h | | 132h | | 36h | | 60h | | 60h | |
| | Evaluation | | | C | | A | | C | | B | | B | |
| | Full cure time | | Hour | 120h | | 132h | | 120h | | 264h | | 264h | |
| | Adhesive force when fully cured | | | 1.7MPa | | 0.1MPa | | 0.7MPa | | 0.8MPa | | 1.4MPa | |
| Viscosity | Each agent | | Pa·s | 94 180 | | 91 76 | | 88 180 | | 119 180 | | 111 157 | |

| | | | MW | | Specific gravity /unit | Example 6 | | Comp. Example 1 | | Comp. Example 2 | | Comp. Example 3 | |
|---|---|---|---|---|---|---|---|---|---|---|---|---|---|
| | | | | | | A | B | A | B | A | B | A | B |
| Formulation (parts by mass) | Polyfunctional aromatic epoxy | | 330 | | 1.20 | 4.4 | | 6.7 | | 6.7 | | | |
| | Polyfunctional aliphatic epoxy 1 | | 300 | | 1.17 | | | | | | | | |
| | Polyfunctional aliphatic epoxy 2 | | 325 | | 1.17 | 2.5 | | | | | | | |
| | Polyfunctional aliphatic epoxy 3 | | 536 | | 1.16 | | | | | | | | |
| | Polyfunctional aliphatic epoxy 4 | | 900 | | 1.16 | | | | | | | 7.7 | |
| | Monofunctional epoxy resin | | 282 | | 0.89 | | | 2.9 | | 2.9 | | 1.9 | |
| | Amine curing agent 1 | | | | 0.87 | | | | 8.7 | | | | |
| | Amine curing agent 2 | | | | 0.97 | | | | | | | | 8.7 |
| | Amine curing agent 3 | | | | 0.97 | | 2.5 | | | | | | |
| | Amine curing agent 4 | | | | 0.97 | | 7.4 | | | | | | |
| | Amine curing agent 5 | | | | 0.90 | | | | | | 8.7 | | |
| | Dispersant | | | | 1.00 | 0.1 | 0.2 | 0.3 | 0.2 | 0.3 | 0.2 | 0.3 | 0.2 |
| | Non-reactive diluent | | | | 1.00 | 2.8 | | | | | | | |
| | Aluminum hydroxide1 | | | | 2.42 | 13.4 | 13.4 | 12.9 | 13.0 | 12.9 | 13.0 | 12.9 | 13.0 |
| | Aluminum hydroxide2 | | | | 2.42 | | | 16.7 | 16.8 | 16.7 | 16.8 | 16.7 | 16.8 |
| | Aluminum hydroxide3 | | | | 2.42 | | | 31.3 | 31.6 | 31.3 | 31.6 | 31.3 | 31.6 |
| | Alumina 1 | | | | 3.96 | 19.2 | 19.1 | | | | | | |
| | Alumina2 | | | | 3.96 | 57.6 | 57.4 | | | | | | |
| | Alumina3 | | | | 3.96 | | | 29.1 | 29.3 | 29.1 | 29.3 | 29.1 | 29.3 |
| | Sum | | | | - | 100 | 100 | 100 | 100 | 100 | 100 | 100 | 100 |
| A:B(mass ratio) | | | | | - | 100 | 190 | 100 | 34 | 100 | 188 | 100 | 40 |
| Equivalent ratio (NH/Ep) | | | | | - | 2.18 | | 2.01 | | 2.00 | | 1.99 | |
| Filling rate in each agent | Total filler | | | | vol% | 74.1% | 70.6% | 78.1% | 76.1% | 78.1% | 76.7% | 78.2% | 78.0% |
| | Alumina | | | | vol% | 57.6% | 54.9% | 17.6% | 17.2% | 17.6% | 17.3% | 17.7% | 17.6% |
| | Aluminum hydroxide | | | | vol% | 16.5% | 15.7% | 60.4% | 59.0% | 60.4% | 59.4% | 60.5% | 60.4% |
| | Epoxy+amine | | | | vol% | 17.3% | 28.9% | 21.3% | 23.3% | 21.3% | 22.7% | 21.2% | 21.4% |
| Filling rate in thermally conductive resin composition | Total filler | | | | vol% | 71.8% | | 77.6% | | 77.2% | | 78.1% | |
| | Alumina | | | | vol% | 55.8% | | 17.5% | | 17.4% | | 17.6% | |
| | Aluminum hydroxide | | | | vol% | 16.0% | | 60.1% | | 59.8% | | 60.5% | |
| | Epoxy+amine | | | | vol% | 25.0% | | 21.8% | | 22.2% | | 21.3% | |
| Specific gravity | Each agent | | | | - | 2.97 | 2.84 | 2.40 | 2.32 | 2.40 | 2.33 | 2.40 | 2.37 |
| | Thermally conductive resin composition | | | | - | 2.89 | | 2.38 | | 2.36 | | 2.39 | |
| Curing rate at 23°C | Time until reached 0.1 MPa | | | | Hour | 60h | | 12h | | overl32 | | overl32 | |
| | Evaluation | | | | | B | | D | | D | | D | |
| | Full cure time | | | | Hour | 264h | | Within 48 h | | 336 h or longer | | 336h or longer | |
| | Adhesive force when fully cured | | | | | 1.4MPa | | 1.4MPa | | Unconfirmed because curing was too slow | | | |
| Viscosity | Each agent | | | | Pa·s | 342 | 291 | 261 | 8 | 261 | 30 | 178 | 180 |

| | | | | | | | | | | | | | |
|---|---|---|---|---|---|---|---|---|---|---|---|---|---|
| * A=first agent, B=second agent * Specific gravity/unit indicates specific gravity in the formulation section and indicates the numerical value unit in the other sections. | | | | | | | | | | | | | |

In the above Examples 1 to 6, since specific polyfunctional epoxy resins and specific amine curing agents were used in combination, the adhesive force reached 0.1 MPa or more in a period of time of 24 to 132 hours from attachment in a room temperature environment, the curing rate could be appropriately controlled, the reworkability in the initial stage of curing was favorable, complete curing could be performed in an appropriate time, and the adhesion after curing was also favorable. In addition, since the amine used in each example had a specific structure, it was less irritating and highly safe, and thus handling properties of the thermally conductive resin composition were enhanced.

In addition, in Examples 1, and 3 to 6, crosslinking proceeded sufficiently over time, and the adhesive force when fully cured was high, and particularly, in Examples 5 and 6, the curing rate was relatively slow and the reworkability was high, but the adhesive force when fully cured was high.

On the other hand, in Comparative Examples 1 and 2, an amine curing agent not specified in Claim 1 was used, and in Comparative Example 3, a polyfunctional epoxy resin not specified in Claim 1 was used, and thus the adhesive force did not reach 0.1 MPa or more in a period of time of 24 to 132 hours from attachment in a room temperature environment. Therefore, it cannot be said that the curing rate was appropriate, and the reworkability in the initial stage of curing or the adhesion was not favorable.

### [Reference Signs List]

- 10: Battery module
- 11, 21: Battery cell
- 12: Battery module housing (module housing)
- 13, 23: Gap filler
- 20: Battery assembly
- 25: Base member

## Claims

1. A thermally conductive resin composition comprising a polyfunctional epoxy resin (A), an amine curing agent (B), and a thermally conductive filler (C),
the polyfunctional epoxy resin (A) being an epoxy resin that has an aromatic ring and is a liquid at 23°C or an epoxy resin having a molecular weight of 600 or less,
the amine curing agent (B) having an amino group (b1) selected from the group consisting of primary amino groups and secondary amino groups,
carbon atom(s) bonded to the nitrogen atom constituting the amino group (b1), not forming a ring structure, at least one of the carbon atom(s) being bonded to another carbon atom and an atom other than a hydrogen atom.

2. The thermally conductive resin composition according to claim 1, wherein the amine curing agent (B) has three or more active hydrogen atoms of amino groups in one molecule.

3. The thermally conductive resin composition according to claim 1, wherein a content of the thermally conductive filler (C) is 50 vol% or more.

4. The thermally conductive resin composition according to claim 1, wherein a content of the polyfunctional epoxy resin (A) with respect to a total amount of the epoxy resin contained in the thermally conductive resin composition is 50 mass% or more.

5. The thermally conductive resin composition according to claim 1, wherein a content of the amine curing agent (B) with respect to a total amount of amines contained in the thermally conductive resin composition is 50 mass% or more.

6. The thermally conductive resin composition according to claim 1, wherein an equivalent ratio of active hydrogen atoms of amino groups contained in the thermally conductive resin composition to epoxy groups contained in the thermally conductive resin composition is more than 1 and 2.7 or less.

7. The thermally conductive resin composition according to claim 1, wherein the amine curing agent (B) has a primary amino group.

8. The thermally conductive resin composition according to claim 7, wherein the amine curing agent (B) has two or more primary amino groups in one molecule.

9. The thermally conductive resin composition according to claim 1, wherein the amine curing agent (B) is an aliphatic amine.

10. The thermally conductive resin composition according to claim 1, further comprising a monofunctional epoxy resin.

11. The thermally conductive resin composition according to any one of claims 1 to 10, comprising a first agent which contains an epoxy resin including the polyfunctional epoxy resin (A) and with which a first container is filled, and a second agent which contains the amine curing agent (B) and with which a second container is filled.

12. A container set, which is filled with the thermally conductive resin composition according to claim 11, comprises the first container filled with the first agent and the second container filled with the second agent.

13. A thermally conductive member formed of a cured product of the thermally conductive resin composition according to any one of claims 1 to 10.

14. A battery assembly comprising the thermally conductive member according to claim 13.
